# EUROPEAN PATENT APPLICATION

(11) **EP 3 520 941 A1**
(43) Date of publication of application: **07.08.2019**
(21) Application number: 17855515.7
(22) Date of filing: 25.08.2017
(51) Int. Cl.: B23D 47/12, B23D 45/04

(54) **CUTTING TOOL**

(30) Priority: 30.09.2016 JP 2016195128; 30.09.2016 JP 2016195016; 30.06.2017 JP 2017129706
(71) Applicant: Koki Holdings Co., Ltd., Minato-ku Tokyo 1086020 (JP)
(72) Inventor: MURAKAMI Takuhiro, Hitachinaka-City Ibaraki 312-8502 (JP); HIRANO Masaru, Hitachinaka-City Ibaraki 312-8502 (JP); SEKINE Yoshitaka, Hitachinaka-City Ibaraki 312-8502 (JP); IWATA Satoshi, Hitachinaka-City Ibaraki 312-8502 (JP)
(74) Representative: Parker, Andrew James
(86) International application number: PCT/JP2017/030549
(87) International publication number: WO 2018/061557

(57) **Abstract**

A cutting tool capable of positioning a third pulley with high accuracy is provided. A miter saw 1 includes a first pulley 601 rotatable integrally with a motor shaft 68B, a countershaft 602 at which a second pulley 603 and a third pulley 605 are provided, a first belt 604 looped under tension over the first pulley 601 and the second pulley 603, an output shaft 606 at which a fourth pulley 607 is provided, a second belt 608 looped under tension over the third pulley 605 and the fourth pulley607, a bearing 70a which rotatably supports the countershaft 602 and is positioned between the second pulley 603 and the third pulley 605, a bearing 70b which rotatably supports the countershaft 602 and is positioned opposite to the second pulley 603 relative to the third pulley 605, a gear case 65 supporting the bearing 70a, and a gear cover 66 supporting the bearing 70b. The gear case 65 has a portion positioned between the second pulley 603 and the third pulley 605.

## Description

### [Technical Field]

The present invention relates to cutting tools and relates, in particular, to a cutting tool configured to rotate a cutting blade to cut a workpiece.

### [Background Art]

Conventionally, there has been known a cutting tool, such as a miter saw, that includes a motor and a plurality of pulleys. Such a cutting tool transmits rotation of the motor to a cutting blade via a belt looped under tension over the pulleys and thus cuts a workpiece.

In this type of cutting tool, rotation of a motor shaft is transmitted to a countershaft via a first-stage transmission mechanism. The first-stage transmission mechanism includes a first pulley attached to the motor shaft, a second pulley attached to the countershaft, and a first belt looped under tension over the first pulley and the second pulley. Rotation of the countershaft is transmitted to an output shaft via a second-stage transmission mechanism, and a cutting blade mounted on the output shaft rotates. The second-stage transmission mechanism includes a third pulley attached to the countershaft, a fourth pulley attached to the output shaft, and a second belt looped under tension over the third pulley and the fourth pulley. In this manner, rotation of a motor can be decelerated and transmitted to the cutting blade without involving a gear. This provides an advantage in that noise traceable to gear meshing does not occur (see Patent Literature 1 below).

### [Citation List]

### [Patent Literature]

[Patent Literature 1] Japanese Patent Application Publication No. 2010-274391

### [Summary of Invention]

### [Technical Problem]

In the above-described cutting tool, however, a load is exerted on each pulley due to belt tension. In particular, a large torque is exerted on the third pulley in transmitting the rotation. Thus, a rotating position of the third pulley fluctuates. This leads to shortcomings in that a loss in transmitting rotation arises and cutting work becomes unstable.

### [Solution to Problem]

In view of the foregoing, it is an object of the present invention to provide a cutting tool capable of positioning a third pulley with high accuracy.

In order to attain the above and other objects, the present disclosure provides a cutting tool including a motor, a first pulley, a countershaft, a second pulley, a third pulley, a first belt, an output shaft, a fourth pulley, a second belt, a first bearing member, a second bearing member, and a support base. The motor has a motor shaft configured to be drivingly rotated. The first pulley is provided at the motor shaft and rotatable integrally with the motor shaft. The countershaft is rotatably driven in accordance with the rotation of the motor shaft. The second pulley and the third pulley are provided at the countershaft. The first belt is looped under tension over the first pulley and the second pulley to transmit the rotation of the motor shaft to the countershaft. The output shaft has a mount portion to which a cutter blade is attachable. The fourth pulley is provided at the output shaft. The second belt is looped under tension over the third pulley and the fourth pulley to transmit the rotation of the countershaft to the output shaft. The first bearing member rotatably supports the countershaft and is positioned between the second pulley and the third pulley. The second bearing member rotatably supports the countershaft and is positioned opposite to the second pulley relative to the third pulley. The support base supports the first bearing member and the second bearing member. The support base has a portion positioned between the second pulley and the third pulley.

With this structure, the third pulley can be fixed at a position with high accuracy without increasing numbers of mechanical components, since the countershaft equipped with the second pulley and the third pulley is rotatably supported by the first bearing member and the second bearing member, the first bearing member being positioned between the third pulley and the second pulley and supported by the support base, and the second bearing member being positioned opposite to the second pulley relative to the third pulley and supported to the bearing base. Accordingly, rotational transmission loss in a rotational transmission route from the motor shaft to the cutting blade can be restrained, thereby performing efficient cutting operation. Further, occurrence of fluctuation of rotating position of the pulleys is avoidable in a case of application of large torque to the third pulley. Thus, stabilized cutting operation can be performed.

Preferably, the support base includes a first support member and a second support member. The first support member supports the first bearing member and the second pulley. The second support member supports the second bearing member.

With this structure, enhanced assembleability can be realized, since each of the first bearing member and the second bearing member is supported by each of support members.

Preferably, the cutting tool further includes a third bearing member and a fourth bearing member. The third bearing member is supported to the first support member and rotatably supports the output shaft. The fourth bearing member is supported to the second support member and rotatably supports the output shaft.

With this structure, the third pulley and the fourth pulley over which the second belt is looped under tension can be fixed at positions with high accuracy, since the output shaft equipped with the fourth pulley is rotatably supported by the third bearing member and the second bearing member those supported to the support base, the fourth pulley being positioned between the third bearing member and the second bearing member. Accordingly, rotational transmission loss in a rotational transmission route from the motor shaft to the cutting blade can be further restrained, and occurrence of fluctuation of rotating position of the third pulley and the fourth pulley is avoidable. Thus, stabilized cutting operation can be performed.

Preferably, the first pulley has a diameter smaller than that of the second pulley. The third pulley has a diameter smaller than that of the fourth pulley. The first pulley and the second pulley provide a reduction ratio higher than that provided by the third pulley and the fourth pulley.

With this structure, torque imparted on the third and fourth pulleys is higher than that imparted on the first and second pulleys, so that a holding mechanism for holding the second belt should provide higher mechanical strength and stability. Here, since the countershaft is rotatably supported by the two bearing members, one bearing member being positioned at one side of the third pulley and the other bearing member being positioned at another side of the third pulley, the third pulley can be stably held even at power transmission at high torque. Thus, generation of vibration due to rattling and fluctuation of the cutting blade can be avoided, rotational transmission loss can be restrained, and efficient and stabilized cutting operation with high accuracy can be performed.

Preferably, the second belt is a timing belt. The third pulley and the fourth pulley are timing pulleys.

With this structure, the countershaft can be rotatably supported at high accuracy and efficient and stabilized cutting operation can be performed, since occurrence of fluctuation can be restrained in spite of application of high load to the cutting blade. Further, because of the employment of the timing belt and the timing pulleys, enhanced rotational transmission efficiency can be obtained, and damage to the belt can be restrained to thus improve durability of the resultant tool.

Preferably, the first belt is a V belt. The first pulley and the second pulley are V pulleys.

With this structure, damage to respective components attendant to the rotational transmission can be restrained, because slippage of the V belt over the outer peripheral surface of the V pulleys occurs in case of application of unusual high load to the cutting blade. Accordingly, improved durability of the tool can be obtained.

Preferably, the cutting tool further includes a motor, a fifth bearing member, and a sixth bearing member. The motor housing accommodates therein the motor. The fifth bearing member is supported to the motor housing and rotatably supports the motor shaft. The sixth bearing member is supported to the first support member and rotatably supports the motor shaft.

With this structure, increase in numbers of mechanical components can be restrained, since the first support member supports not only the first bearing member and the third bearing member but also the fifth bearing member.

Preferably, the second support member includes a first support part and a first guide part. The first support part supports the second bearing member. The first guide part is positioned adjacent to the first support part and sloped inward in a radial direction of the countershaft in a direction from an axially inner portion of the countershaft toward the first support part. The second support part supports the fourth bearing member.

With this structure, since the first guide part for guiding the second bearing member which rotatably supports the countershaft is positioned adjacent to the first support part, the position of the countershaft can be easily corrected along the first guide part during assembly of the tool even if the countershaft is inadvertently inclined, and the second bearing member mounted on the countershaft can be easily inserted into the first support portion during assembly. Hence, assembly of the tool can be realized with high positional accuracy without any increase in workload and numbers of mechanical parts, and mass production at low cost can be realized.

Preferably, the second support member further includes a second guide part. The second guide part is positioned adjacent to the second support part and sloped inward in a radial direction of the output shaft in a direction from an axially inner portion of the output shaft toward the second support part.

With this structure, since the second guide part for guiding the fourth bearing member which rotatably supports the output shaft is positioned adjacent to the second support part, the position of the output shaft can be easily corrected along the second guide part during assembly of the tool even if the output shaft is inadvertently inclined, and the fourth bearing member mounted on the output shaft can be easily inserted into the second support part during assembly. Hence, further improvement on positional accuracy and assembly can be realized.

Preferably, the second bearing member rotatably supports an end portion of the countershaft. The end portion is opposite to another end portion at which the second pulley is provided. The first guide part is positioned adjacent to an end of the first support part. The end is closer to the second pulley than another end of the first support part is to the second pulley. The second guide part is positioned adjacent to an end of the second support part. The end is farther from the mount portion than another end of the second support part is from the mount portion.

With this structure, the part of the countershaft, the part being closer to the second pulley and the part of the output shaft, the part being farther from the mount portion are supported by the first support member through the first bearing member and the third bearing member, respectively. After the second belt is looped over the third pulley and the fourth pulley, the second support member is assembled to the countershaft and the output shaft through the second bearing member and the fourth bearing member, respectively at a part of the countershaft, the part being farther from the second pulley and at a part of the output shaft, the part being closer to the mount portion, respectively. Thus, improved assembleability results. Further, tension imparted on the second belt is lowered by detaching the second support member. Thus, replacement of the second belt by a new belt can be facilitated, to enhance maintenance to the belt.

Preferably, the third bearing member rotatably supports an end portion of the output shaft. The end portion is opposite to another end portion at which the mount portion is provided. The first guide part is positioned adjacent to an end of the first support part. The end is farther from the second pulley than another end of the first support part is from the second pulley. The second guide part is positioned adjacent to an end of the second support part. The end is closer to the mount portion than another end of the second support part is to the mount portion.

With this structure, the part of the countershaft, the part being farther from the second pulley and the part of the output shaft, the part being closer to the mount portion are supported by the second support member through the second bearing member and the fourth bearing member, respectively. After the second belt is looped under tension over the third pulley and the fourth pulley, the first support member is assembled to the motor shaft, the countershaft, and the output shaft through the sixth bearing member, the first bearing member, and the third bearing member, respectively at a part of the countershaft, the part being closer to the second pulley and at a part of the output shaft, the part being farther from the mount portion, respectively. Thus, a belt between the countershaft and the output shaft can be easily set, and improved assembleability results.

Preferably, the second support member includes a first support part and a second support part. The first support part supports the fourth bearing member. The second support part supports the second bearing member. The first support part and the second support part are differently constructed from each other.

With this structure, since the second support member is divided into the first support part and the second support part, and each bearing member is supported to each support part. Therefore, each bearing member can be easily fitted in each support part. Therefore, assembleability can further be improved. Further, inclination of the countershaft and the output shaft can be corrected, respectively, and therefore, desirable positional accuracy can be realized.

Preferably, the first support member includes a first positioning portion to fix a position of the first support part in a radial direction of the output shaft. Preferably, the first support portion includes a first engagement portion engaging the first positioning portion.

With this structure, inclination of the fourth bearing member and the output shaft can be easily and securely corrected, since the first support part supporting the fourth bearing member is fixed to a position with respect to the first support member.

Preferably, the first support part includes a second positioning portion to fix a position of the second support part in a radial direction of the countershaft. Preferably, the second support portion includes a second engagement portion engaging the second positioning portion.

With this structure, inclination of the second bearing member and the countershaft can be easily and securely corrected, since the second support portion supporting the second bearing member is fixed to a position with respect to the first support portion. Accordingly, a distance between an axis of the countershaft and an axis of the output shaft can be corrected, enabling assembly of the tool with high positional accuracy.

Preferably, the first support part extends to cover the countershaft, and is formed with a through-hole facing an outer end portion in an axial direction of the countershaft. The second bearing member is inserted in the through-hole. The second support part supports the second bearing member inserted in the through-hole.

With this structure, inclination of the countershaft can be corrected by the second support portion to correct a distance between axes of the countershaft and the output shaft, after inclination of the output shaft is corrected by the first support portion to correct a distance between axes of the third pulley and the fourth pulley. Accordingly, assembleablity of the tool can be improved, enabling the assembly with high positional accuracy.

Preferably, the first support part is formed with a notch extending axially inward of the countershaft from an open end of the through-hole, the open end being open to the second support part. The second support part includes a closure portion closing an open end of the notch which is a part of the open end of the through-hole.

With this structure, the notch is formed in the first support portion at a position adjacent to the second bearing member. Hence, cooling with external air can be performed even in a case where the output shaft, the countershaft, and the second bearing member, etc. are heated to high temperature due to heat generated at the second belt during operation of the tool. Further, the open end of the notch is closed by the second support portion which is a member different from the first support portion. Therefore, entry of cutting chips can be restrained during cutting operation using the cutting blade. Accordingly, cutting operation would not be interrupted due to high temperature and entry of foreign substances, and workability can be improved, and the tool can provide improved durability.

Preferably, the closure portion protrudes outward in a radial direction of the countershaft.

With this structure, entry of the cutting chips can further be effectively restrained.

Preferably, the cutting tool further includes a fan provided at the motor shaft and rotatable integrally with the motor shaft to generate a cooling air stream. The notch and the closure portion define in combination a port for discharging the cooling air stream therethrough out of the second support member.

With this structure, cooling air from the fan passes through interiors of the first and second support members, and is discharged through the port. Therefore, effective cooling to each bearing members, the countershaft, and the output shaft, etc. can be performed, and accordingly, enhanced workability and high durability of the tool can be obtained.

### [Advantageous Effects of Invention]

In the cutting tool according to the present invention, since the third pulley can be fixed at a position with high accuracy, rotational transmission loss can be restrained, and stabilized cutting operation can be performed.

### [Brief Description of the Drawings]

Fig. 1 is a right side view illustrating a structure of a miter saw according to a generic embodiment of the present invention.
Fig. 2 is a left side view illustrating the structure of the miter saw according to the generic embodiment of the present invention.
Fig. 3 is a front view illustrating the structure of the miter saw according to the generic embodiment of the present invention.
Fig. 4 is a cross-sectional view taken along a line A-A in Fig. 1, and particularly illustrating an internal arrangement of the cutting unit in a miter saw according to a first embodiment.
Fig. 5 is an exploded perspective view illustrating several components of the cutting unit in the miter saw according to the first embodiment.
Fig. 6 is a view illustrating the interior of the cutting unit in the miter saw according to the first embodiment for description of assembling process (part 1).
Fig. 7 is a view illustrating the interior of the cutting unit in the miter saw according to the first embodiment for description of assembling process (part 2).
Fig. 8 is an exploded perspective view illustrating several components of the cutting unit in the miter saw according to the first embodiment for description of assembling process (part 1).
Fig. 9 is a perspective view illustrating the several components of the cutting unit in the miter saw according to the first embodiment for description of assembling process (part 2).
Fig. 10 is a cross-sectional view taken along the line A-A in Fig. 1 and particularly illustrating an internal arrangement of the cutting unit in a miter saw according to a second embodiment.
Fig. 11 is a view illustrating the interior of the cutting unit in the miter saw according to the second embodiment for description of assembling process (part 1).
Fig. 12 is a view illustrating the interior of the cutting unit in the miter saw according to the second embodiment for description of assembling process (part 2).
Fig. 13 is a view illustrating the interior of the cutting unit in the miter saw according to the second embodiment for description of assembling process (part 3).
Fig. 14 is a cross-sectional view taken along the line A-A in Fig. 1 illustrating an interior of a cutting unit in a miter saw according to a third embodiment.
Fig. 15 is a cross-sectional view taken along the line A-A in Fig. 1 illustrating an interior of a cutting unit in a miter saw according to a fourth embodiment.
Fig. 16 is an exploded perspective view illustrating several components of the cutting unit in the miter saw according to the fourth embodiment.
Fig. 17 is an exploded perspective view illustrating configuration of a gear cover in the miter saw according to the fourth embodiment.
Fig. 18 is a view illustrating an interior of the cutting unit in the miter saw according to the fourth embodiment for description of assembling process (part 1).
Fig. 19 is a view illustrating the interior of the cutting unit in the miter saw according to the fourth embodiment for description of assembling process (part 2).
Fig. 20 is an exploded perspective view illustrating several components of a cutting unit in a miter saw according to a fifth embodiment.
Fig. 21 is a cross-sectional view taken along the line A-A in Fig. 1 and particularly illustrating a flow of cooling air in a miter saw according to the fifth embodiment.
Fig. 22 is a cross-sectional view illustrating a cutting unit in a miter saw according to a sixth embodiment.
Figs. 23A and 23B each are a cross-sectional view of the cutting unit in the miter saw according to the sixth embodiment, in which Fig. 23A is a view illustrating a state where an engagement member is separated from a fourth pulley, and Fig. 23B is a view illustrating a state where the engagement member engages the fourth pulley.
Figs. 24A and 24B each are a cross-sectional view of a cutting unit in a miter saw according to a seventh embodiment, in which Fig. 24A is a view illustrating a state where an engagement member is separated from a fourth pulley, and Fig. 24B is a view illustrating a state where the engagement member engages the fourth pulley.
Figs. 25A and 25B each are a cross-sectional view of a cutting unit in a miter saw according to an eighth embodiment, in which Fig. 25A is a view illustrating a state where an engagement member is separated from a fourth pulley, and Fig. 25B is a view illustrating a state where the engagement member engages the fourth pulley.
Figs. 26A to 26D each are a view illustrating a cutting unit in a miter saw according to a ninth embodiment, in which Fig. 26A is a cross-sectional view illustrating a state where an engagement member is separated from a fourth pulley, Fig. 26B is a cross-sectional view taken along a line b-b in Figs. 26A and 26C each are a cross-sectional view illustrating a state where the engagement member engages the fourth pulley, and Fig. 26D is a cross-sectional view taken along a line d-d in Fig. 26C.

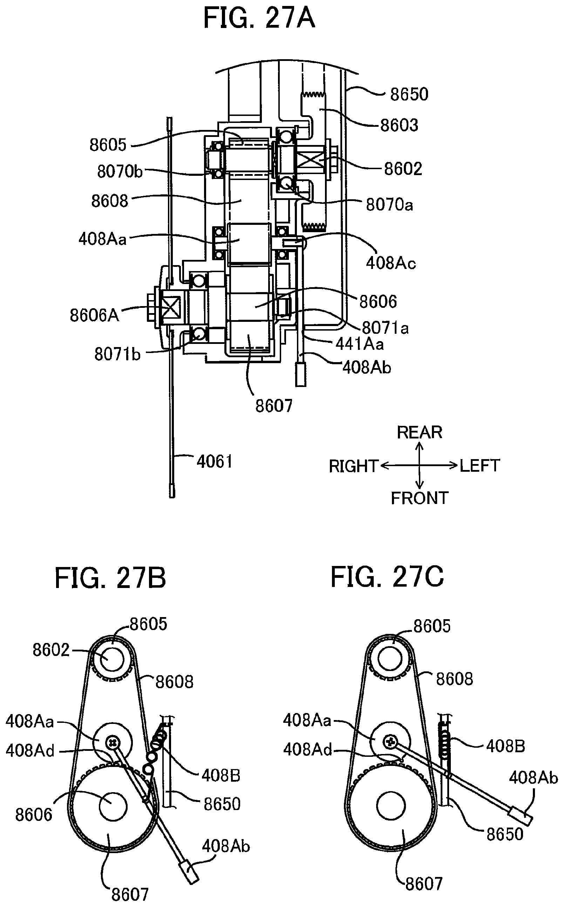

Figs. 27A to 27C each are a view illustrating a cutting unit in a miter saw according to a tenth embodiment, in which Fig. 27A is a cross-sectional view illustrating a state where an engagement member engages a fourth pulley, Fig. 27B is a left side view illustrating a third pulley, a timing belt, a lock mechanism, and the fourth pulley in the engaging state of the engagement member with the fourth pulley, and Fig. 27C is a left side view illustrating the third pulley, the timing belt, the lock mechanism, and the fourth pulley in a state of disengagement of the engagement member from the fourth pulley.

### [Description of Embodiments]

Hereinafter, embodiments of the present invention will be described with reference to the appended drawings. Herein, a case where the present invention is applied to a miter saw will be described as an example.

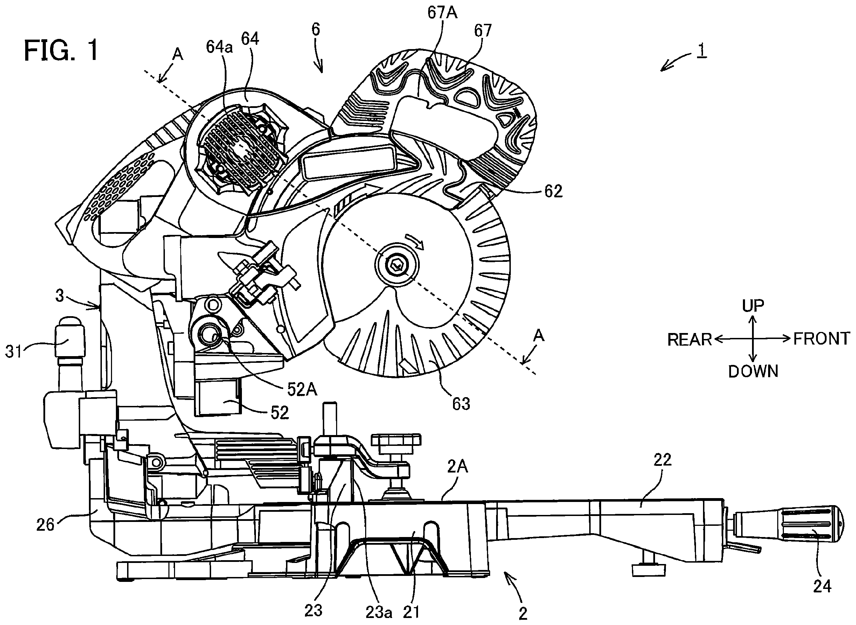

First, a configuration of a miter saw according to an embodiment of the present invention will be described with reference to Figs. 1 to 3. Figs. 1, 2, and 3 are, respectively, a right side view, a left side view, and a front view illustrating a configuration of a miter saw 1 according to an embodiment of the present invention. As illustrated in Figs. 1 to 3, the miter saw 1 includes a base unit 2, a holder 3, a guide unit 4, a moving unit 5, and a cutting unit 6. The base unit 2 includes a mounting surface 2A. The cutting unit 6 includes a cutting blade 61.

In the following description, a direction from the base unit 2 to where the guide unit 4 is provided is defined as an upward direction, and its opposite direction is defined as a downward direction. A direction from the holder 3 to where the cutting unit 6 is provided is defined as a frontward direction, and its opposite direction is defined as a rearward direction. A right side of the miter saw 1 as viewed from its rear in Fig. 1 is defined as a rightward direction, and its opposite direction is defined as a leftward direction.

As illustrated in Figs. 1 to 3, the base unit 2 includes a base 21, a turntable 22, and a fence 23.

The base 21 is made of metal. The base 21 can be placed on a floor surface. The turntable 22 is made of metal. The turntable 22 is coupled to the base 21 via a pivot shaft that is orthogonal to an upper surface of the turntable 22. The turntable 22 is disposed such that its upper surface is substantially flush with an upper surface of the base 21. When a workpiece is to be cut, the mounting surface 2A where the workpiece can be placed is defined by the upper surface of the base 21 and the upper surface of the turntable 22. A groove (not illustrated) is formed in the turntable 22 and the base 21. The cutting blade 61 can enter the groove when the cutting unit 6 is lowered in operation.

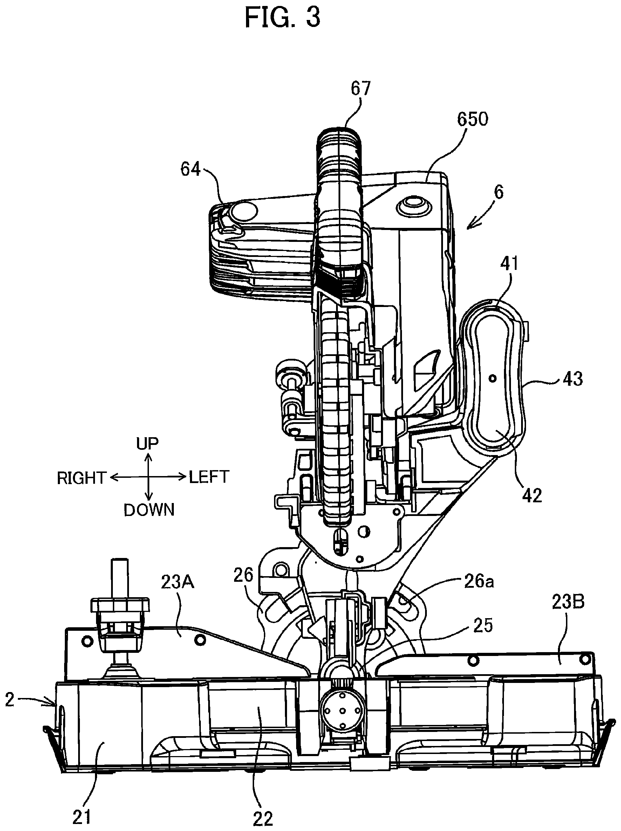

The fence 23 is provided on the base 21. As illustrated in Fig. 3, the fence 23 includes a right fence 23A and a left fence 23B. The right fence 23A and the left fence 23B include a pressing surface 23a. The pressing surface 23a is substantially orthogonal to the mounting surface 2A. When a workpiece is to be cut, one surface of the workpiece is made to abut the pressing surface 23a of the fence 23. Thus, the workpiece can be cut stably.

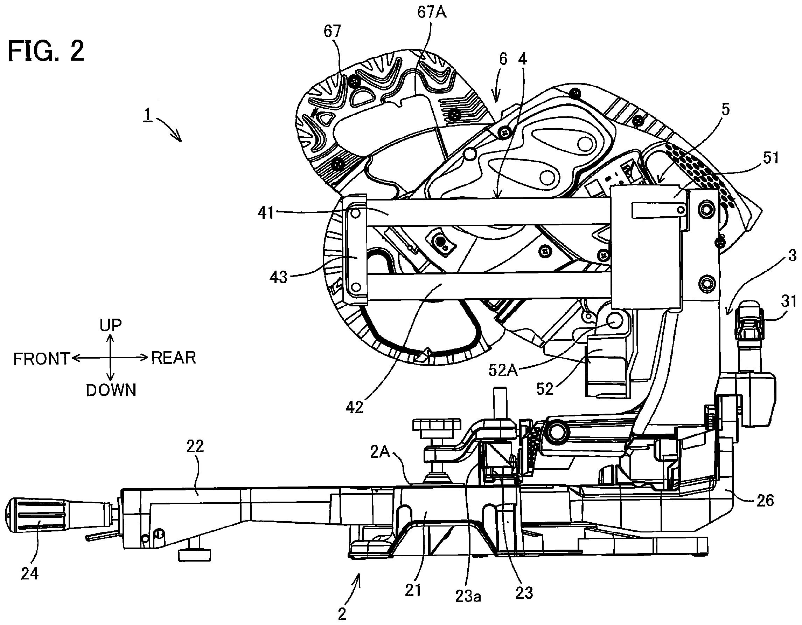

An operating portion 24 is provided on a front portion of the turntable 22. The operating portion 24 is operated by a user when the turntable 22 is turned and its turning position is fixed. A tilting shaft 25 and a projection 26 are provided on a rear portion of the turntable 22. The tilting shaft 25 is provided such that the tilting shaft 25 extends parallel to a side surface of the cutting blade 61 in a frontward/rearward direction and a center axis of the tilting shaft 25 substantially coincides with the upper surface of the turntable 22. As illustrated in Figs. 1 and 2, the projection 26 projects upward. An elongated hole 26a is formed in the projection 26. The elongated hole 26a has a circular arc shape with its center lying on the center axis of the tilting shaft 25.

The holder 3 is erected upward at the rear portion of the turntable 22. A lower portion of the holder 3 is pivotable about an axis of the tilting shaft 25. Thus, the holder 3 can tilt in a rightward/leftward direction relative to the turntable 22. A threaded hole (not illustrated) is formed in the holder 3 at a position that coincides with the position of the elongated hole 26a. A clamp lever 31 is screwed into this threaded hole.

The guide unit 4 includes a first rod 41, a second rod 42, and a coupling member 43. The first rod 41 and the second rod 42 are each formed of a high-rigidity material, such as a pipe material. The first rod 41 extends in a direction that is parallel to the mounting surface 2A of the base unit 2 and that is orthogonal to an axis of rotation of the cutting blade 61. The second rod 42 extends parallel to the first rod 41. The second rod 42 is located under the first rod 41. The first rod 41 and the second rod 42 have substantially equal lengths and are shorter than the turntable 22 in its lengthwise direction (frontward/rearward direction). The coupling member 43 is attached to front end portions of the first rod 41 and the second rod 42. The first rod 41 and the second rod 42 are configured to tilt in the rightward/leftward direction along with the holder 3 as the holder 3 tilts in the rightward/leftward direction relative to the turntable 22.

The moving unit 5 pivotally movably supports the cutting unit 6, in a direction toward and away from the base unit 2. The moving unit 5 is supported by the guide unit 4 and is slidably movable in the frontward/rearward direction. As illustrated in Fig. 2, the moving unit 5 includes a slide portion 51 and a cutting unit support 52.

The slide portion 51 is so provided as to extend over the first rod 41 and the second rod 42. The first rod 41 and the second rod 42 penetrate the slide portion 51. The slide portion 51 is configured to slide on the first rod 41 and the second rod 42 between the holder 3 and the coupling member 43. The cutting unit support 52 is formed integrally with the slide portion 51. As illustrated in Figs. 1 and 2, a pivot shaft 52A is fixed to the cutting unit support 52. The pivot shaft 52A extends in a direction (rightward/leftward direction) orthogonal to an axial direction (frontward/rearward direction) of the first rod 41 and the second rod 42. The cutting unit support 52 pivotally movably supports the cutting unit 6 about an axis of the pivot shaft 52A in the direction toward and away from the base unit 2.

As will be described later, the cutting unit 6 is partially covered by a housing and a gear cover 66. The housing includes a saw cover 62, a protective cover 63, a motor housing 64, and a gear housing 650. The cutting unit 6 is configured to pivot as the gear cover 66 pivots about an axis of the pivot shaft 52A.

As illustrated in Fig. 1, an outer periphery of the cutting blade 61 is partially covered by the saw cover 62. The protective cover 63 is pivotally provided inside the saw cover 62. The protective cover 63 is configured to cover a portion of the outer periphery of the cutting blade 61 that projects out of the saw cover 62. As illustrated in Fig. 1, the protective cover 63 is located at a position where the protective cover 63 covers the portion of the outer periphery of the cutting blade 61 that projects out of the saw cover 62, in a state where the cutting unit 6 is being pivoted upward. In addition, the protective cover 63 is housed inside the saw cover 62 by a link mechanism (not illustrated) and located at a position where the protective cover 63 allows the portion of the outer periphery of the cutting blade 61 that projects out of the saw cover 62 to be exposed, in a state where the cutting unit 6 is being pivoted downward (not illustrated).

A handle portion 67 is integrally provided on the motor housing 64. The handle portion 67 is located in a plane extended from the side surface of the cutting blade 61. A switch 67A is provided on the handle portion 67. The switch 67A is configured to control driving of a motor (described later) housed inside the motor housing 64.

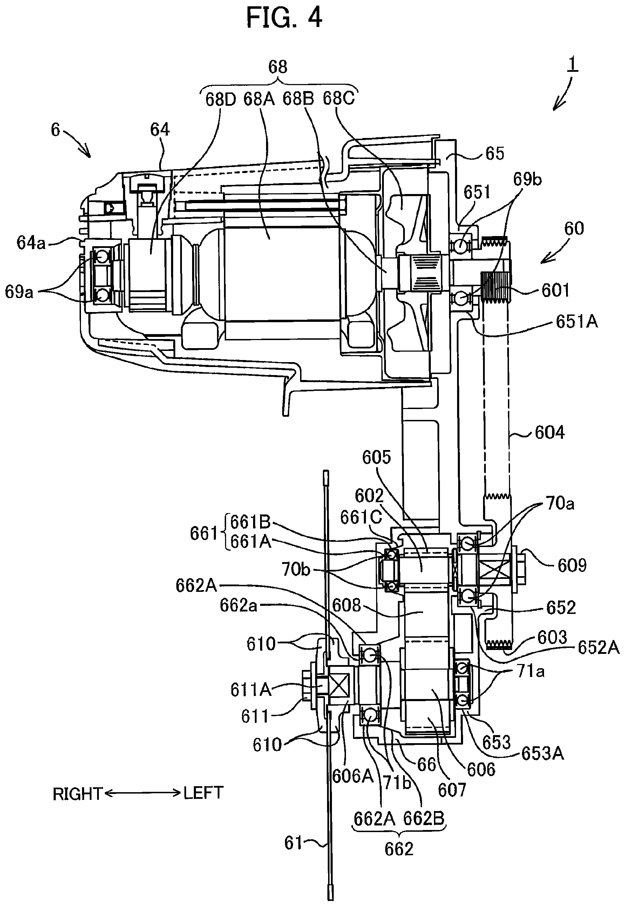

Next, a detailed configuration of the cutting unit 6 of the miter saw 1 according to a first embodiment will be described with reference to Fig. 4. Fig. 4 illustrates an inside of the cutting unit 6 of the miter saw 1 according to the first embodiment. Fig. 4 is a sectional view taken along an A-A plane indicated in Fig. 1. In Fig. 4, illustration of the saw cover 62 and the protective cover 63 is omitted.

As illustrated in Fig. 4, the cutting unit 6 includes a motor 68, a transmission mechanism unit 60, and the cutting blade 61. The cutting unit 6 is partially covered by the housing.

The housing for the cutting unit 6 includes the saw cover 62, the protective cover 63, the motor housing 64, and the gear housing 650. The motor housing 64 has a substantially cylindrical shape extending in the rightward/leftward direction. As illustrated in Figs. 1 and 4, a slit-shaped intake port 64a is formed in a right side surface of the motor housing 64. The gear housing 650 is coupled to a left side opening of the motor housing 64. The gear housing 650 has a substantially U-like shape that extends leftward in a direction parallel to the cutting blade 61 (the A-A direction indicated in Fig. 1) and that opens at a right side end.

A gear case 65 is provided inside the gear housing 650. The gear case 65 is coupled to the left side opening of the motor housing 64. The gear case 65 is so shaped as to extend in the direction parallel to the cutting blade 61 (the A-A direction indicated in Fig. 1). The gear cover 66 has a cylindrical shape extending in the rightward/leftward direction and having a substantially elliptical cross-section. The gear cover 66 is coupled to the gear case 65. The shapes of the gear case 65 and the gear cover 66 will be described later in detail.

The motor 68 is housed inside the motor housing 64. The motor 68 includes a motor body 68A, a motor shaft 68B, a fan 68C, and a commutator 68D. The motor shaft 68B has a substantially columnar shape. The motor shaft 68B is so disposed as to extend in the rightward/leftward direction of the motor body 68A. The motor shaft 68B is rotatably supported by the motor housing 64 via a bearing 69a and rotatably supported by the gear case 65 via a bearing 69b. A left end portion of the motor shaft 68B projects outward (leftward) out of the gear case 65.

The fan 68C is fixed to the motor shaft 68B at a left side of the motor body 68A. The fan 68C is configured to corotate with the motor shaft 68B. The fan 68C is configured to suck in an outside air through the intake port 64a of the motor housing 64 and discharge an air through a discharge port (described later) formed in the gear case 65. Thus, the fan 68C is configured to cool the motor body 68A, the commutator 68D, and so on.

The bearing 69a is a ball bearing made of a steel material. The bearing 69a is supported by the motor housing 64 and rotatably supports a right end portion of the motor shaft 68B. The bearing 69a is an example of a fifth bearing member in the present invention. The bearing 69b is a ball bearing made of a steel material. The bearing 69b is supported by the gear case 65 and rotatably supports the motor shaft 68B on a left side of the fan 68C. The bearing 69b is an example of a sixth bearing member in the present invention.

The transmission mechanism unit 60 is configured to transmit rotation of the motor 68 to the cutting blade 61 in a two-stage belt system. As illustrated in Fig. 4, the transmission mechanism unit 60 includes a first pulley 601, a countershaft 602, a second pulley 603, a first belt 604, a third pulley 605, a spindle 606, a fourth pulley 607, and a second belt 608. Among the above, the first pulley 601, the second pulley 603, and the first belt 604 constitute a first-stage transmission mechanism; and the third pulley 605, the fourth pulley 607, and the second belt 608 constitute a second-stage transmission mechanism.

The first pulley 601 is a V-pulley. The first pulley 601 has a cylindrical shape extending in the rightward/leftward direction. A groove extending in a circumferential direction is formed in an outer peripheral surface of the first pulley 601. The first pulley 601 is fixed to the left end portion of the motor shaft 68B at the outside (left side) of the gear case 65. The first pulley 601 is configured to corotate with the motor shaft 68B. The first pulley 601 is an example of a first pulley in the present invention.

The countershaft 602 has a substantially columnar shape. The countershaft 602 is so disposed as to extend substantially parallel to the motor shaft 68B in the rightward/leftward direction. The countershaft 602 is rotatably supported by the gear case 65 via a bearing 70a and rotatably supported by the gear cover 66 via a bearing 70b. A left end portion of the countershaft 602 projects outward (leftward) out of the gear case 65. The countershaft 602 is an example of a countershaft in the present invention.

The bearing 70a is a ball bearing made of a steel material. The bearing 70a is supported by the gear case 65 and rotatably supports the countershaft 602. The bearing 70a is an example of a first bearing member in the present invention. The bearing 70b is a ball bearing made of a steel material. The bearing 70b is supported by the gear cover 66 and rotatably supports a right end portion of the countershaft 602. The bearing 70b is an example of a second bearing member in the present invention.

The second pulley 603 is a V pulley, and has a cylindrical shape extending in the rightward/leftward direction. A groove extending in a circumferential direction is formed in an outer peripheral surface of the second pulley 603. The second pulley 603 has an outer diameter greater than an outer diameter of the first pulley 601. The second pulley 603 is fixed to the left end portion of the countershaft 602 via a fastener 609 at the outside (left side) of the gear case 65. The second pulley 603 is configured to corotate with the countershaft 602. The second pulley 603 is an example of a second pulley in the present invention.

The first belt 604 is an endless belt made of resin into an endless form. The first belt 604 is a V-belt having a groove extending in a longitudinal direction formed in an inner peripheral surface. An upper portion of the first belt 604 rests on an outer periphery of the first pulley 601. A lower portion of the first belt 604 rests on an outer periphery of the second pulley 603. Thus, the first belt 604 is looped under tension over the first pulley 601 and the second pulley 603. The first belt 604 is formed to have a perimeter smaller than a stretching distance between the first pulley 601 and the second pulley 603. The first belt 604 is looped under tension over the first pulley 601 and the second pulley 603 in a state where the first belt 604 is tensioned at a stretch rate of greater than 1. The first belt 604 is configured to corotate with the first pulley 601 and the second pulley 603 through a frictional force produced between the inner peripheral surface of the first belt 604 and the outer peripheral surfaces of the first pulley 601 and the second pulley 603. The first belt 604 is an example of a first belt in the present invention.

The third pulley 605 is a timing pulley. The third pulley 605 has a cylindrical shape extending in the rightward/leftward direction. Concavities and convexities of a gear shape are formed in an outer peripheral surface of the third pulley 605. The third pulley 605 has an outer diameter smaller than the outer diameter of the second pulley 603. The third pulley 605 is press-fitted and fixed on the countershaft 602 rightward to a middle portion of the countershaft 602. The third pulley 605 is configured to corotate with the countershaft 602. The third pulley 605 is an example of a third pulley in the present invention.

The spindle 606 is so disposed as to extend in the rightward/leftward direction substantially parallel to the motor shaft 68B and the countershaft 602. The spindle 606 is rotatably supported by the gear case 65 via a bearing 71a and rotatably supported by the gear cover 66 via a bearing 71b. A mounting portion 606A is provided at a right end portion of the spindle 606. The cutting blade 61 is to be mounted to the mounting portion 606A. The mounting portion 606A projects outward (rightward) out of the gear cover 66. The spindle 606 is an example of an output shaft in the present invention.

The bearing 71a is a ball bearing made of a steel material. The bearing 71a is supported by the gear case 65 and rotatably supports a left end of the spindle 606. The bearing 71a is an example of a third bearing member in the present invention. The bearing 71b is a ball bearing made of a steel material. The bearing 71b is supported by the gear cover 66 and rotatably supports the spindle 606. The bearing 71b is an example of a fourth bearing member in the present invention.

The fourth pulley 607 is a timing pulley and has a cylindrical shape extending in rightward/leftward direction. Concavities and convexities of a gear shape are formed in an outer peripheral surface of the fourth pulley 607. The fourth pulley 607 has an outer diameter greater than the outer diameter of the third pulley 605. The fourth pulley 607 is press-fitted and fixed on the spindle 606 leftward to a middle portion of the spindle 606. The fourth pulley 607 is configured to corotate with the spindle 606. The fourth pulley 607 is an example of a fourth pulley in the present invention.

The second belt 608 is an endless belt made of resin into an endless form. The second belt 608 is a timing belt having concavities and convexities of a gear shape formed in an inner peripheral surface. An upper portion of the second belt 608 rests on an outer periphery of the third pulley 605. A lower portion of the second belt 608 rests on an outer periphery of the fourth pulley 607. Thus, the second belt 608 is looped under tension over the third pulley 605 and the fourth pulley 607. At this point, the concavities and convexities in the inner peripheral surface of the second belt 608 mesh with concavities and convexities in the outer peripheral surfaces of the third pulley 605 and the fourth pulley 607. Thus, rotation of the third pulley 605 is transmitted to the fourth pulley 607 via the second belt 608, and the fourth pulley 607 rotates. The second belt 608 is formed to have a perimeter smaller than a stretching distance between the third pulley 605 and the fourth pulley 607. The second belt 608 is looped under tension over the third pulley 605 and the fourth pulley 607 in a state where the second belt 608 is tensioned at a stretch rate of greater than 1. The second belt 608 is an example of a second belt in the present invention.

The cutting blade 61 has a substantially circular disc shape. The cutting blade 61 is fixed to the mounting portion 606A of the spindle 606 via a pair of flanges 610 and a fastener 611. The cutting blade 61 is so supported as to be rotatable along with the spindle 606.

Next, an operation in which rotation of the motor 68 is transmitted to the cutting blade 61 will be described.

Upon a user pressing down the switch 67A on the handle portion 67, the motor 68 starts running, and the motor shaft 68B corotates with the first pulley 601. In conjunction with this rotation, the first belt 604 looped under tension over the first pulley 601 corotates with the first pulley 601 through a frictional force, and the second pulley 603 having the first belt 604 looped under tension thereover corotates with the first belt 604 through a frictional force. Specifically, the first belt 604 transmits rotation of the motor shaft 68B and the first pulley 601 to the second pulley 603, and the second pulley 603 is caused to rotate along with the countershaft 602. Since the second pulley 603 has a diameter greater than that of the first pulley 601, rotation of the motor shaft 68B is decelerated and transmitted to the countershaft 602. In other words, the first-stage transmission mechanism including the first pulley 601, the second pulley 603, and the first belt 604 decelerates the rotation of the motor shaft 68B and transmits the decelerated rotation to the countershaft 602.

The second pulley 603 corotates with the countershaft 602 and the third pulley 605 fixed to the countershaft 602 at the same rotation speed. In conjunction with this rotation, the second belt 608 that meshes with the third pulley 605 is rotated by the third pulley 605, and the fourth pulley 607 that meshes with the second belt 608 is rotated by the second belt 608. Specifically, the second belt 608 transmits rotation of the countershaft 602 and the third pulley 605 to the fourth pulley 607, and the fourth pulley 607 is caused to rotate along with the spindle 606. Since the fourth pulley 607 has a diameter greater than that of the third pulley 605, rotation of the countershaft 602 is decelerated and transmitted to the spindle 606. In other words, the second-stage transmission mechanism including the third pulley 605, the fourth pulley 607, and the second belt 608 decelerates the rotation of the countershaft 602 and transmits the decelerated rotation to the spindle 606.

The fourth pulley 607 corotates with the spindle 606. In conjunction with this rotation, the cutting blade 61 mounted to the mounting portion 606A of the spindle 606 corotates with the spindle 606 at the same rotation speed. In other words, rotation of the motor shaft 68B is decelerated in two stages by the two-stage transmission mechanism, and the decelerated rotation is transmitted to the cutting blade 61.

In the miter saw 1 according to the present embodiment, an enlarging ratio of the diameter of the fourth pulley 607 relative to the diameter of the third pulley 605 is smaller than an enlarging ratio of the diameter of the second pulley 603 relative to the diameter of the first pulley 601 so that a reduction ratio of the first-stage transmission mechanism is greater than a reduction ratio of the second-stage transmission mechanism.

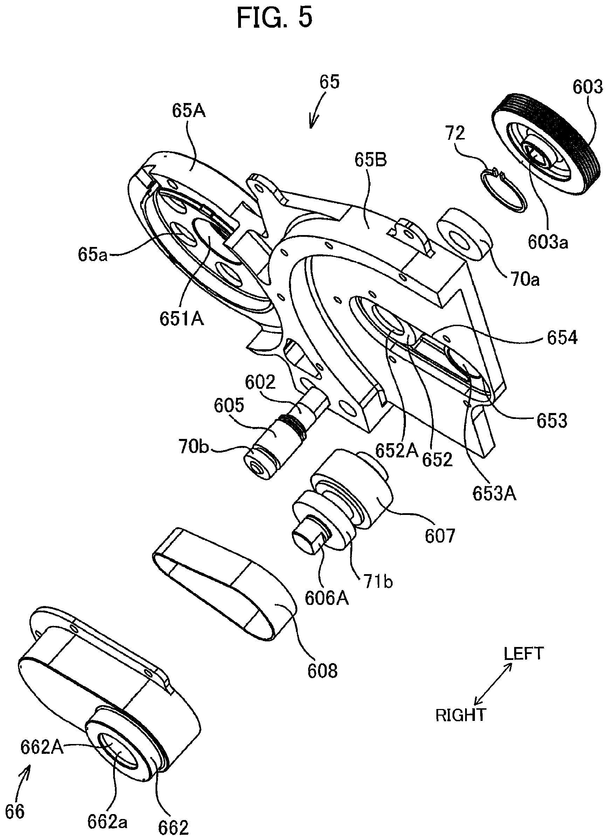

Next, the shape of the gear case 65 of the miter saw 1 according to the first embodiment will be described in detail with reference to Figs. 4 and 5. Fig. 5 is an exploded perspective view illustrating a configuration of a portion of the cutting unit 6 of the miter saw 1 according to the first embodiment.

The gear case 65 is configured to cover a left side surface of the cutting unit 6 and support the bearing 69b, the bearing 70a, and the bearing 71a. As illustrated in Fig. 5, the gear case 65 is formed integrally by a gear case 65A and a gear case 65B. The gear case 65 is an example of a first support member in the present invention.

The gear case 65A is formed in one piece of a metal steel material. The gear case 65A has a substantially columnar shape. The gear case 65A includes a protrusion 651. The protrusion 651 projects leftward from a center portion of the gear case 65A. The protrusion 651 has a cylindrical shape extending in the rightward/leftward direction. The protrusion 651 includes a support part 651A. The support part 651A defines an inner peripheral surface of the protrusion 651. A right end portion of the support part 651A is open. A left end portion of the support part 651A has a circular ring shape with an opening formed at its center portion. As illustrated in Fig. 4, the bearing 69b is disposed inside the support part 651A. An inner diameter of the support part 651A is substantially equal to an outer diameter of the bearing 69b. The bearing 69b is fitted inside the support part 651A and fixed therein. The motor shaft 68B projects leftward through a left side opening of the protrusion 651. The first pulley 601 is attached to the projecting portion of the motor shaft 68B. As illustrated in Fig. 5, a plurality of discharge ports 65a is formed in a periphery of the opening of the gear case 65A.

The gear case 65B has substantially elliptical right and left side surfaces. A groove 654 is formed in the right side surface at its center portion. The groove 654 has a substantially elliptical cross-section. Two protrusions 652 and 653 are disposed inside the groove 654.

The protrusion 652 is disposed toward the gear case 65A. The protrusion 652 has a cylindrical shape extending in the rightward/leftward direction. The protrusion 652 includes a support 652A. The support 652A defines an inner peripheral surface of the protrusion 652. Right and left ends of the support 652A are open. As illustrated in Fig. 4, the bearing 70a is disposed inside the support 652A. An inner diameter of the support 652A is substantially equal to an outer diameter of the bearing 70a. The bearing 70a is fitted inside the support 652A and fixed therein.

The protrusion 653 is aligned with the protrusion 652 in a direction of a major axis of the groove 654. The protrusion 653 has a cylindrical shape extending in the rightward/leftward direction. The protrusion 653 includes a support 653A. The support 653A defines an inner peripheral surface of the protrusion 653. A right end portion of the support 653A is open. A left end portion of the support 653A is covered by the left side surface of the gear case 65B. As illustrated in Fig. 4, the bearing 71a is disposed inside the support 653A. An inner diameter of the support 653A is substantially equal to an outer diameter of the bearing 71a. The bearing 71a is fitted inside the support 653A and fixed therein.

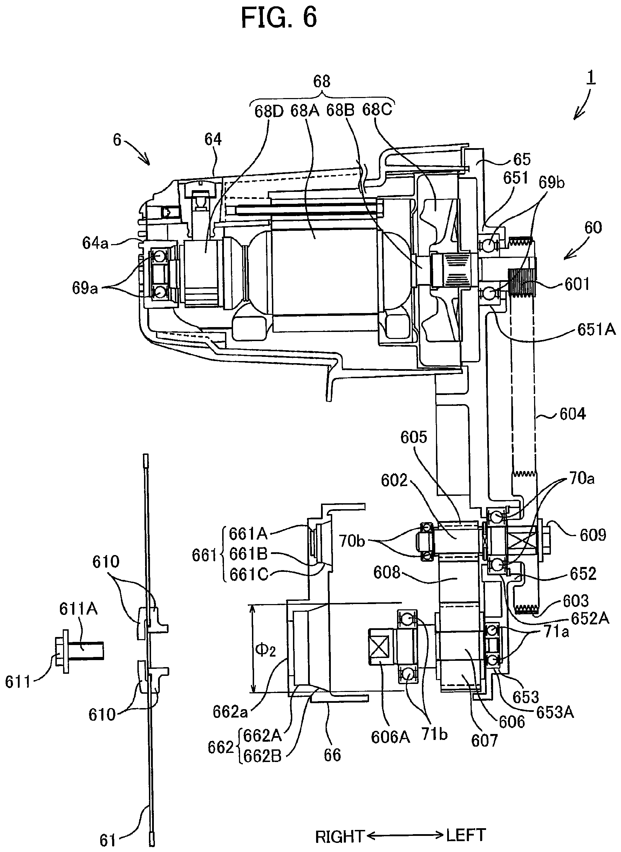

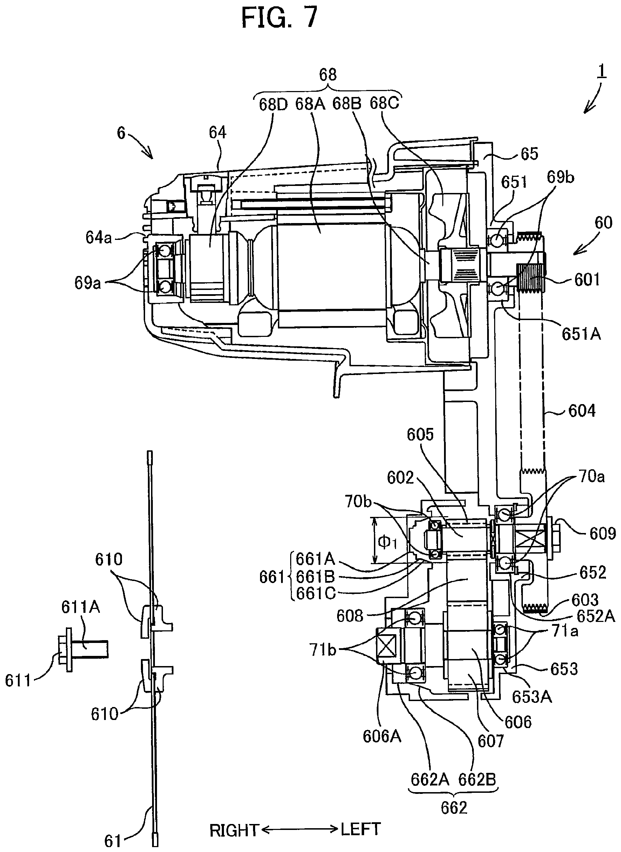

Next, the shape of the gear cover 66 of the miter saw 1 according to the first embodiment will be described in detail with reference to Figs. 4 to 7. Figs. 6 and 7 each illustrate the inside of the cutting unit 6 of the miter saw 1 according to the first embodiment. Figs. 6 and 7 are illustrations for describing an assembly process.

As illustrated in Fig. 4, the gear cover 66 is disposed on a right side of the gear case 65. The gear cover 66 supports the bearing 70b and the bearing 71b. The gear cover 66 is an example of a second support member in the present invention. The gear case 65 and the gear cover 66 are an example of a support base in the present invention.

As illustrated in Fig. 5, the gear cover 66 has a cylindrical shape having a substantially elliptical cross-section. The gear cover 66 is so disposed as to cover the groove 654 in the gear case 65.

As illustrated in Figs. 4 and 6, a three-step groove 661 is formed inside the gear cover 66. The groove 661 includes a lid 661A, a support 661B, and a guide 661C that are arrayed in the rightward/leftward direction.

The lid 661A has a cylindrical shape extending in the rightward/leftward direction. A left end portion of the lid 661A is open. A right end portion of the lid 661A is covered by a right side surface of the gear cover 66. The lid 661A has an inner diameter greater than an outer diameter of the countershaft 602 and an inner diameter of the bearing 70b.

The support part 661B is connected adjacent to a left side of the lid 661A. The support part 661B has a cylindrical inner peripheral surface extending in the rightward/leftward direction. Right and left ends of the support part 661B are open. The support part 661B has an inner diameter that is greater than the inner diameter of the lid 661A and that is substantially equal to an outer diameter of the bearing 70b. As illustrated in Fig. 4, the bearing 70b is disposed inside the support 661B. The support part 661B is an example of a first support part in the present invention.

The guide 661C is connected adjacent to a left side of the support 661B. The guide 661C has a tapered inner peripheral surface extending in the rightward/leftward direction. Right and left ends of the guide 661C are open. The guide 661C is inclined inward in a radial direction of the countershaft 602 along a direction toward the support part 661B and the bearing 70b, that is, along a direction toward the right side, and a diameter of the guide 661C thus decreases. As illustrated in Fig. 7, an inner diameter Φ₁ of the guide 661C at its left end portion is greater than the outer diameter of the bearing 70b. The guide 661C is an example of a first guide part in the present invention.

As illustrated in Fig. 5, the gear cover 66 is provided with a protrusion 662. The protrusion 662 projects outward (rightward). The protrusion 662 has a cylindrical shape extending in the rightward/leftward direction. The protrusion 662 includes a support part 662A and a guide 662B.

The support part 662A has a cylindrical inner peripheral surface extending in the rightward/leftward direction. A left end portion of the support part 662A is open, and a right end portion of the support part 662A has a circular ring shape with an opening 662a formed at its center portion. The support part 662A is formed such that the opening 662a has an inner diameter greater than an outer diameter of the spindle 606. The inner peripheral surface of the support part 662A has an inner diameter substantially equal to an outer diameter of the bearing 71b. As illustrated in Fig. 4, the bearing 71b is disposed inside the support 662A. The support part 662A is an example of a second support part in the present invention.

The guide 662B is connected adjacent to a left side of the support 662A. The guide 662B has a tapered inner peripheral surface extending in the rightward/leftward direction. Right and left ends of the guide 662B are open. The guide 662B is inclined inward in a radial direction of the spindle 606 along a direction toward the support part 662A and the bearing 71b, that is, along a direction toward the right side, and a diameter of the guide 662B thus decreases. As illustrated in Fig. 6, an inner diameter Φ₂ of the guide 662B at its left end portion is greater than the outer diameter of the bearing 71b. The guide 662B is an example of a second guide part in the present invention.

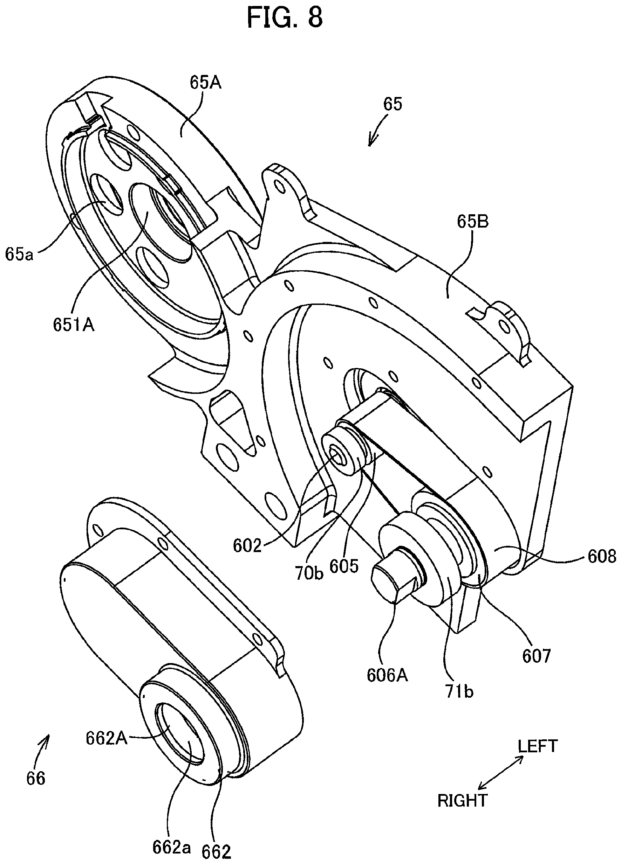

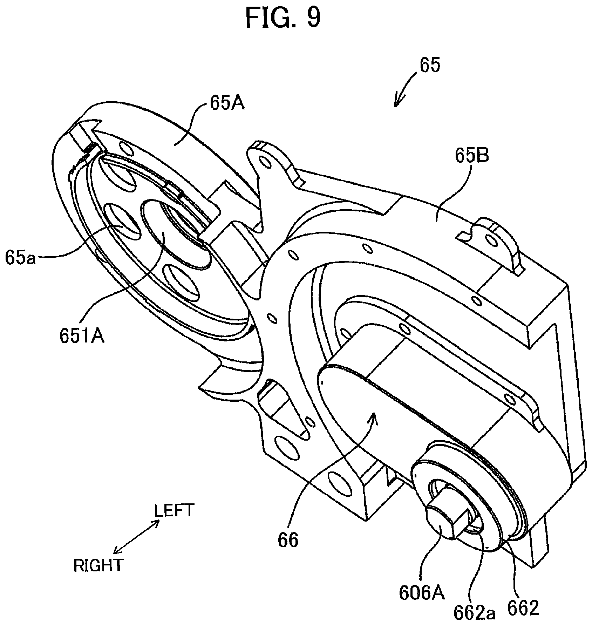

Next, a process of assembling the cutting unit 6 of the miter saw 1 according to the first embodiment will be described with reference to Figs. 4 to 9. Figs. 8 and 9 are, respectively, an exploded perspective view and a perspective view illustrating a configuration of a portion of the cutting unit 6 of the miter saw 1 according to the first embodiment. Figs. 8 and 9 are illustrations for describing an assembly process.

The third pulley 605 is press-fitted and fixed onto an outer surface of the countershaft 602 at a predetermined position on the right side of the middle portion of the countershaft 602. At a later point, the bearing 70b is fitted and fixed onto the outer surface of the countershaft 602 at a predetermined position on the right side of the third pulley 605.

The fourth pulley 607 is press-fitted and fixed onto an outer surface of the spindle 606 at a predetermined position on the left side of the middle portion of the spindle 606. The bearing 71a is fitted and fixed onto the outer surface of the spindle 606 at a predetermined position on the left side of the fourth pulley 607. The bearing 71b is fitted and fixed onto the outer surface of the spindle 606 at a predetermined position on the right side of the fourth pulley 607. The fourth pulley 607, the bearing 71a, and the bearing 71b may be fixed to the spindle 606 in any order.

The motor 68 is housed in the motor housing 64. The bearing 69a is fixed to the right end portion of the motor shaft 68B of the motor 68. As illustrated in Fig. 6, the bearing 69a is fixed at a predetermined position inside the motor housing 64. The bearing 69b is also fitted and fixed onto an outer surface of the motor shaft 68B at a predetermined position on the left side of the fan 68C.

In the first embodiment, the motor shaft 68B, the countershaft 602, and the spindle 606 are attached to the gear case 65 via the bearing 69b, the bearing 70a, and the bearing 71a. Then, the gear cover 66 is attached to the gear case 65.

As will be illustrated below, the bearing 69b and the bearing 71a are attached to the gear case 65 from the right side, and the bearing 70a is attached to the gear case 65 from the left side. The bearings 69b, 70a, and 71a may be attached in any order.

The motor shaft 68B with the bearing 69b attached thereto is fitted into the protrusion 651 of the gear case 65A from the right side. The bearing 69b is supported with its outer peripheral portion abutting the support part 651A. At this point, the left end portion of the motor shaft 68B projects leftward through the left side opening of the protrusion 651. Alternatively, the motor shaft 68B may be inserted and attached from the right side after the bearing 69b is fixed to the support part 651A.

The countershaft 602 is fitted into the protrusion 652 of the gear case 65B from the right side. The countershaft 602 is fitted and fixed into the bearing 70a fixed to the gear case 65 at a predetermined position on the left side of the third pulley 605 on the countershaft 602. The bearing 70b is supported with its outer peripheral portion abutting the support 652A of the gear case 65. At this point, the left end portion of the countershaft 602 projects leftward through a left side opening of the protrusion 652. Alternatively, the bearing 70a may be fitted on the outer surface of the countershaft 602 and fixed to the support 652A after the countershaft 602 is inserted into the support 652A.

The spindle 606 with the bearing 71a attached thereto is fitted into the protrusion 653 of the gear case 65B from the right side. The bearing 71b is supported with its outer peripheral portion abutting the support 653A. Alternatively, the spindle 606 may be inserted and attached from the right side after the bearing 71b is fixed to the support 653A.

As described above, the bearing 69b, the bearing 70a, and the bearing 71a are fixed to the gear case 65, and the left sides of the motor shaft 68B, the countershaft 602, and the spindle 606 are positioned relative to the gear case 65. At this point, the position of the third pulley 605 fixed to the countershaft 602 substantially coincides with the position of the fourth pulley 607 fixed to the spindle 606 in the rightward/leftward direction.

Next, as illustrated in Figs. 6 and 8, the second belt 608 is looped under tension over the third pulley 605 and the fourth pulley 607. The second belt 608 is attached from the right end sides of the countershaft 602 and the spindle 606 in a state where the second belt 608 is looped under tension at a stretch rate of greater than 1. The second belt 608 is looped under tension over the outer peripheral surface of the third pulley 605 and the outer peripheral surface of the fourth pulley 607. At this point, due to the tension of the second belt 608, the unfixed right end portion of the countershaft 602 tilts in a direction approaching the spindle 606, and the unfixed right end portion of the spindle 606, that is, the side where the mounting portion 606A is provided tilts in a direction approaching the countershaft 602.

In this tilted state, the gear cover 66 is attached to the gear case 65 from the right side. The bearing 70b and the bearing 71b may be attached to the gear cover 66 from the left side, and then the gear cover 66 may be attached to the gear case 65. In the case described herein, however, as illustrated Fig. 6, the bearing 70b and the bearing 71b are attached to the countershaft 602 and the spindle 606, respectively, and then the gear cover 66 is attached to the gear case 65.

The gear cover 66 is brought closer, from the right side, to the countershaft 602 tilted in a direction approaching the spindle 606 and the spindle 606 tilted in a direction approaching the countershaft 602 upon the second belt 608 having been looped under tension thereover. At this point, firstly, the spindle 606 extending further rightward than the countershaft 602 enters the guide 662B. As illustrated in Fig. 6, the inner diameter Φ₁ of the left side opening of the guide 662B is greater than the outer diameter of the bearing 71b. Thus, the spindle 606 with the bearing 71b attached thereto can enter the guide 662B while remaining in a tilted state.

The diameter of the guide 662B decreases along the rightward direction. The spindle 606 is guided by the abutment of a portion of the outer peripheral surface of the bearing 71b with the inner peripheral surface of the guide 662B, the portion of the outer peripheral surface being closer to the countershaft 602 than a remaining portion thereof is to the countershaft 602. In other words, as illustrated in Fig. 7, the gear cover 66 guides the bearing 71b and the spindle 606 in a direction away from the countershaft 602 along the inclination of the inner peripheral surface of the guide 662B. Being guided by the guide 662B, the spindle 606 has its tilted state corrected, and the bearing 71b enters the support 662A.

In a similar manner, when the gear cover 66 approaches from the right side, the countershaft 602 enters the guide 661C. As illustrated in Fig. 7, the inner diameter Φ₂ of the left side opening of the guide 661C is greater than the outer diameter of the bearing 70b. Thus, the countershaft 602 with the bearing 70b attached thereto can enter the guide 661C while remaining in a tilted state.

As in the guide 662B, the diameter of the guide 661C decreases along the rightward direction. The countershaft 602 is guided by the abutment of a portion of the outer peripheral surface of the bearing 70b with the inner peripheral surface of the guide 661C, the portion of the outer peripheral surface being closer to the spindle 606 than a remaining portion thereof is to the spindle 606. Specifically, the gear cover 66 guides the bearing 70b and the countershaft 602 in a direction away from the spindle 606 along the inclination of the inner peripheral surface of the guide 661C. Being guided by the guide 661C, the countershaft 602 has its tilted state corrected, and the bearing 70b enters the support 661B.

The bearing 71b is fixed inside the support 662A, and the bearing 70b is fixed inside the support 661B. As illustrated in Fig. 9, the gear cover 66 abuts the right side surface of the gear case 65. Then, the gear cover 66 is fixed to the gear case 65 with a fastener, such as a screw. At this point, as illustrated in Figs. 4 and 9, the mounting portion 606A of the spindle 606 projects rightward through the opening 662a in the protrusion 662.

Next, the first pulley 601, the second pulley 603, and the first belt 604 are attached. The first pulley 601, the second pulley 603, and the first belt 604 may be attached before the gear cover 66 is attached. In addition, the first pulley 601 and the second pulley 603 may be attached in either order.

The first pulley 601 is fitted and fixed onto an outer surface of the left end portion of the motor shaft 68B projecting out of the gear case 65. The second pulley 603 is fitted, via a washer 72, onto an outer surface of the left end portion of the countershaft 602 projecting out of the gear case 65. The second pulley 603 is fixed with the fastener 609. Then, the first belt 604 is looped under tension over the first pulley 601 and the second pulley 603. The first pulley 601 is attached from the left side in a state where the first belt 604 is looped under tension at a stretch rate of greater than 1. The first belt 604 is looped under tension over the outer peripheral surface of the first pulley 601 and the outer peripheral surface of the second pulley 603.

The cutting blade 61 is mounted to the mounting portion 606A of the spindle 606. The pair of flanges 610 is attached to the cutting blade 61. A projection 611A of the fastener 611 is inserted into a hole provided at a center of the cutting blade 61. Thus, the cutting blade 61 is fixed to the mounting portion 606A.

As described thus far, the miter saw 1 according to the present embodiment allows the third pulley 605 to be positioned with high accuracy without any specialized component being provided since the bearing 70a and the bearing 70b supporting the countershaft 602 are disposed on the left and the right of the third pulley 605. The third pulley 605 is a component on which a particularly large torque is exerted in the transmission mechanism unit 60. Thus, this improvement in the positioning accuracy of the third pulley 605 makes it possible to suppress a loss in transmitting rotation in the transmission mechanism unit 60 and allows cutting work to be carried out efficiently. Even in a case where a large torque is exerted on the third pulley 605, fluctuation of the third pulley 605 can be prevented, and stable cutting work can be carried out with high accuracy. The bearing 70a is supported by the gear case 65, and the bearing 70b is supported by the gear cover 66. Thus, assembleability can be improved. Furthermore, a portion of the gear case 65 is disposed between the second pulley 603 and the third pulley 605. Thus, the second pulley 603 can be attached from the outside of the gear case 65, and assembleability and maintenance to the second pulley 603 can be improved.

Due to the tension (pulling) of the V-belt (first belt 604), a load is exerted on the countershaft 602 upward (in a direction approaching the motor shaft 68B) at a portion on the left side of the bearing 70a. In addition, due to the tension (pulling) of the timing belt (second belt 608), a load is exerted on the countershaft 602 downward (in a direction approaching the spindle 606) at a portion on the right side of the bearing 70a. In other words, the countershaft 602 is pulled upward and downward (in opposite directions) at the left side and the right side, respectively. However, the bearing 70a is disposed between the two locations where the loads are exerted. Thus, the countershaft 602 can be supported more stably. Furthermore, the countershaft 602 is supported entirely on the right side of the second pulley 603. Thus, the number of components to be provided on the left side of the second pulley 603 can be reduced, and the size can be reduced.

In a similar manner, the bearing 71a and the bearing 71b that support the spindle 606 are supported by the gear case 65 and the gear cover 66, respectively. The bearing 69a and the bearing 69b that support the motor shaft 68B are supported by the motor housing 64 and the gear case 65. Thus, each component of the transmission mechanism unit 60 can be positioned with high accuracy without an increase in the number of components.

In the transmission mechanism unit 60, a V-belt and a V-pulley are used in the first-stage transmission mechanism, and a timing belt and a timing pulley are used in the second-stage transmission mechanism. Thus, the timing belt can reliably transmit a high torque held at the time of deceleration to the spindle 606, and efficiency in transmitting rotation improves. In addition, even in a case where an unexpected heavy load is produced in the cutting blade 61, transmission of the load to the motor can be suppressed as the V-belt slides on the V-pulley, and any damage to the components is suppressed. Accordingly, durability of the miter saw 1 improves. In addition, no gear meshing is present in the transmission path. Thus, the miter saw 1 with ensured quietness can be achieved.

Furthermore, in the gear cover 66, the guide 661C and the guide 662B are provided adjacent to the support part 661B and the support part 662A that support the bearing 70b and the bearing 71b. Thus, even in a case where the countershaft 602 and the spindle 606 tilt due to the tension of the second belt 608 during assembly, this tilted state can be corrected with ease. Accordingly, assembly with high positioning accuracy can be achieved without an increase in the stepped portions and in the number of components, and assembleability and mass productivity can be improved. When the gear cover 66 is removed, the tension of the second belt 608 decreases automatically. Thus, replacement of the second belt 608 is facilitated, and maintenance to the belt can be improved.

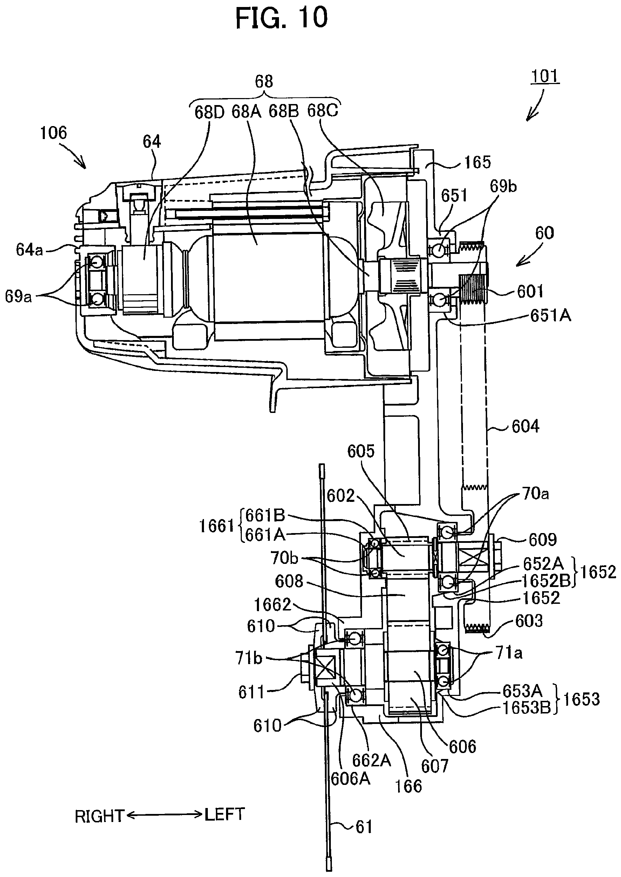

Next, a second embodiment of the present invention will be described with reference to Figs. 10 to 13. The present embodiment differs from the first embodiment in that a tapered guide is provided in a gear case. Members and configurations that are identical to those of the first embodiment will be given identical reference characters, and descriptions thereof will be omitted. Only the configurations that differ from those of the first embodiment will be described.

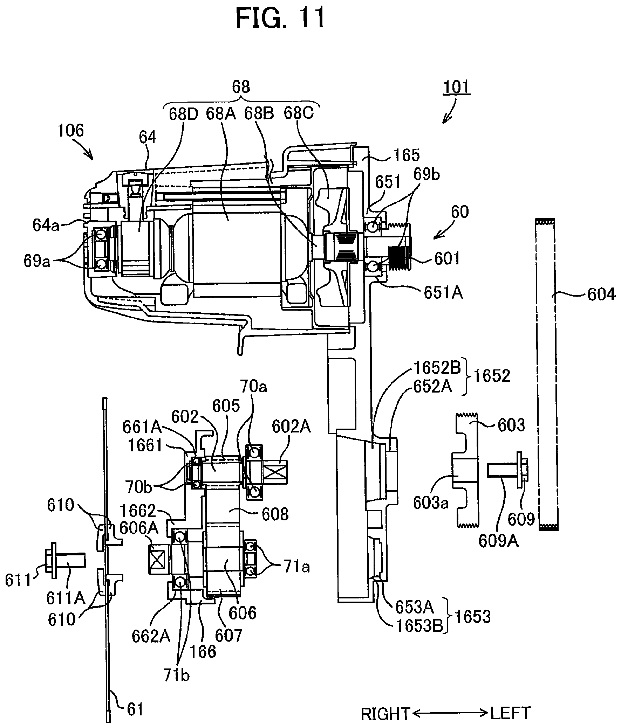

Fig. 10 illustrates an inside of a cutting unit 106 of a miter saw 101 according to the second embodiment. Fig. 10 is a sectional view taken along the A-A plane indicated in Fig. 1. Figs. 11, 12, and 13 each illustrate an inside of the cutting unit 106 of the miter saw 101 according to the second embodiment. Figs. 11 to 13 are illustrations for describing an assembly process.

A gear case 165 covers a left side surface of the cutting unit 106 inside a gear housing 650 (Fig. 3). The gear case 165 supports the bearing 69b, the bearing 70a, and the bearing 71a. The gear case 165 is an example of the second support member in the present invention.

As illustrated in Fig. 10, a protrusion 651, a protrusion 1652, and a protrusion 1653 are provided on the gear case 165.

The protrusion 1653 has a cylindrical shape extending in the rightward/leftward direction. The protrusion 1653 includes a support part 1653A and a guide 1653B. The support part 1653A defines an inner peripheral surface of the protrusion 1653. A right end portion of the support part 1653A is open. A left end portion of the support part 1653A is covered by a left side surface of a gear case 65B. As illustrated in Fig. 10, the bearing 71a is disposed inside the support 1653A. An inner diameter of the support part 1653A is substantially equal to an outer diameter of the bearing 71a. The bearing 71a is fitted inside the support part 1653A and fixed therein.

The guide 1653B is connected adjacent to a right side of the support 1653A. The guide 1653B has a tapered inner peripheral surface extending in the rightward/leftward direction. Right and left ends of the guide 1653B are open. The guide 1653B is inclined inward in a radial direction of the spindle 606 along a direction toward the support part 1653A and the bearing 71a, that is, along a direction toward the left side, and a diameter of the guide 1653B thus decreases. An inner diameter of the guide 1653B at its right end portion is greater than the outer diameter of the bearing 71a. The support part 1652A is an example of the first support part in the present invention. The guide 1652B is an example of the first guide part in the present invention.

The protrusion 1653 has a cylindrical shape extending in the rightward/leftward direction. The protrusion 1653 includes a support part 1653A and a guide 1653B. The support part 1653A defines an inner peripheral surface of the protrusion 1653. A right end portion of the support part 1653A is open. A left end portion of the support part 1653A is covered by a left side surface of a gear case 65B. As illustrated in Fig. 10, the bearing 71a is disposed inside the support 1653A. An inner diameter of the support part 1653A is substantially equal to an outer diameter of the bearing 71a. The bearing 71a is fitted inside the support part 1653A and fixed therein.

The guide 1653B is connected adjacent to a right side of the support 1653A. The guide 1653B has a tapered inner peripheral surface extending in the rightward/leftward direction. Right and left ends of the guide 1653B are open. The guide 1653B is inclined inward in a radial direction of the spindle 606 along a direction toward the support part 1653A and the bearing 71a, that is, along a direction toward the left side, and a diameter of the guide 1653B thus decreases. An inner diameter of the guide 1653B at its right end portion is greater than the outer diameter of the bearing 71a. The support part 1653A is an example of the second support part in the present invention. The guide 1653B is an example of the second guide part in the present invention.

As illustrated in Fig. 10, a gear cover 166 is disposed on the right side of the gear case 165. The gear cover 166 supports the bearing 70b and the bearing 71b. The gear cover 166 is an example of the first support member in the present invention.

As illustrated in Fig. 10, a groove 1661 is formed inside the gear cover 166. The groove 1661 includes a lid 661A and a support part 661B that are arrayed side by side in the rightward/leftward direction.

As illustrated in Fig. 10, the gear cover 166 is provided with a protrusion 1662. The protrusion 1662 projects outward (rightward). The protrusion 1662 has a cylindrical shape extending in the rightward/leftward direction. The protrusion 1662 includes the support 662A.

Next, a process of assembling the cutting unit 106 of the miter saw 101 according to the second embodiment will be described briefly. In the present embodiment, the countershaft 602 and the spindle 606 are attached to the gear cover 166 via the bearing 70b and the bearing 71b. Then, the gear case 165 is attached.

When the second belt 608 is looped under tension over the third pulley 605 and the fourth pulley 607 after the countershaft 602 and the spindle 606 are attached to the gear cover 166, due to the tension of the second belt 608, an unfixed left end portion of the countershaft 602 tilts in a direction approaching the spindle 606, and an unfixed left end portion of the spindle 606 tilts in a direction approaching the countershaft 602 (Fig. 11).

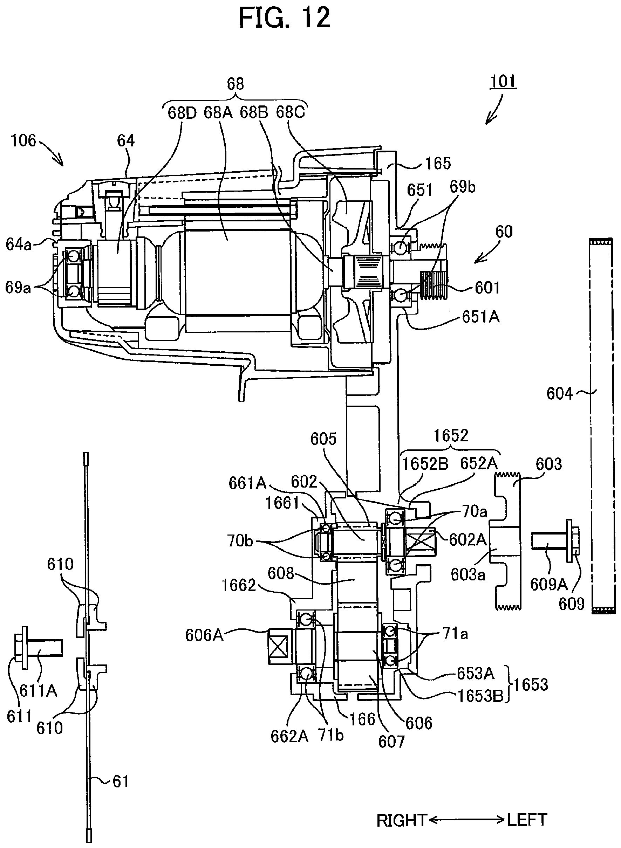

In this tilted state, as illustrated in Fig. 12, the gear case 165 is attached from the left side (the gear cover 166 is attached to the gear case 165 from the right side). At this point, the bearing 70a attached to the countershaft 602 abuts the inner peripheral surface of the guide 1652B. Thus, the bearing 70a and the countershaft 602 are guided in a direction away from the spindle 606, and the tilted state of the countershaft 602 is corrected. In a similar manner, the bearing 71a attached to the spindle 606 abuts the inner peripheral surface of the guide 1653B. Thus, the bearing 71a and the spindle 606 are guided in a direction away from the countershaft 602, and the tilted state of the spindle 606 is corrected.

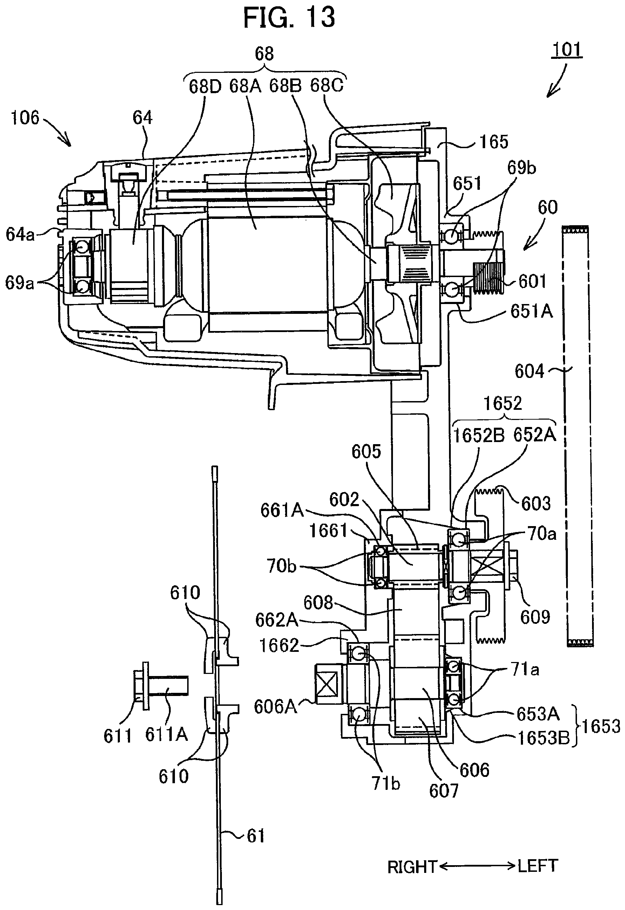

Then, as illustrated in Fig. 13, the bearing 70a is fixed inside the support 1652A, and the bearing 71a is fixed inside the support 1653A.

Thereafter, the first pulley 601 and the second pulley 603 are attached from the left side of the gear case 165, and the first belt 604 is looped under tension over the first pulley 601 and the second pulley 603. In addition, the cutting blade 61 is mounted to the mounting portion 606A of the spindle 606.

As described above, in the miter saw 101 according to the present embodiment, in the gear case 165, the guide 1652B and the guide 1653B are provided adjacent to the support part 1652A and the support part 1653A that support the bearing 70a and the bearing 70b. Thus, even in a case where the countershaft 602 and the spindle 606 tilt due to the tension of the second belt 608 during assembly, this tilted state can be corrected with ease. Accordingly, assembly with high positioning accuracy can be achieved without an increase in the stepped portions and in the number of components, and assembleability and mass productivity can be improved.

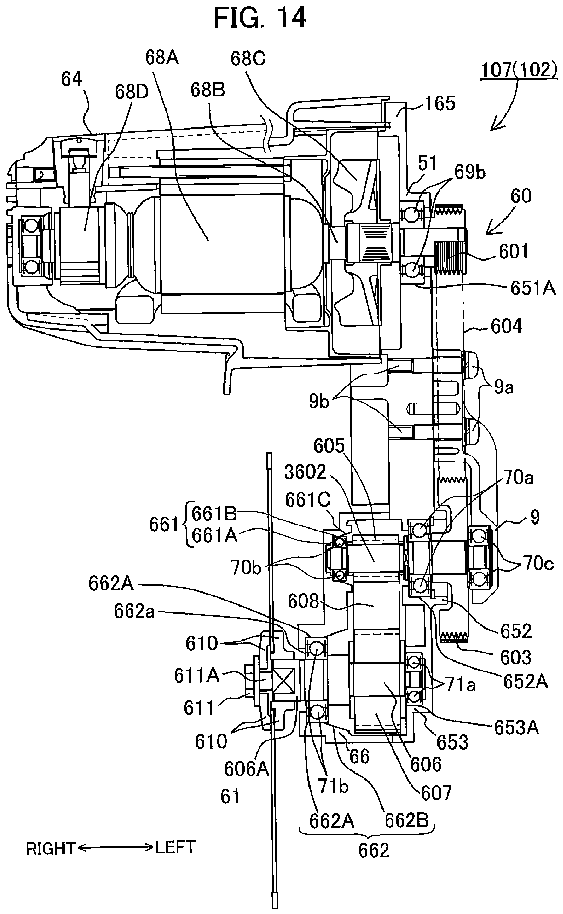

Next, a third embodiment of the present invention will be described with reference to Fig. 14. The present embodiment differs from the first embodiment in that the number of bearing members for a countershaft is increased. Incidentally, like parts and components are designated by the same reference numerals as those shown in the first embodiment to avoid duplicating description, and a structure different from the first embodiment will be described.

Fig. 14 illustrates an inside of a cutting unit 107 of a miter saw 102 according to the third embodiment. Fig. 14 is a sectional view taken along the A-A plane indicated in Fig. 1. In the third embodiment, the fastener 609 that fixes the second pulley 603 in the first embodiment is removed, and another bearing 70c is added to the portion where the fastener 609 is located in the first embodiment. In order to dispose the bearing 70c, a screw hole 9b is provided in a gear case 165, and a bearing holding member 9 configured to hold the bearing 70c is fixed to the gear case 165 with a screw 9a. The screw 9a penetrates the bearing holding member 9 and is screwed into the screw hole 9b.

In the miter saw 102, a countershaft 3602 is supported by the bearing 70a, the bearing 70b, and the bearing 70c. Thus, tilting of the countershaft 3602 caused by a pulling force (tension) of a belt can be suppressed. In particular, the added bearing 70c is located closer to one end (left side) of the countershaft 3602 than the second pulley 603. Thus, the countershaft 3602 is supported at both ends, and tilting of the countershaft can be further suppressed than in the first embodiment.

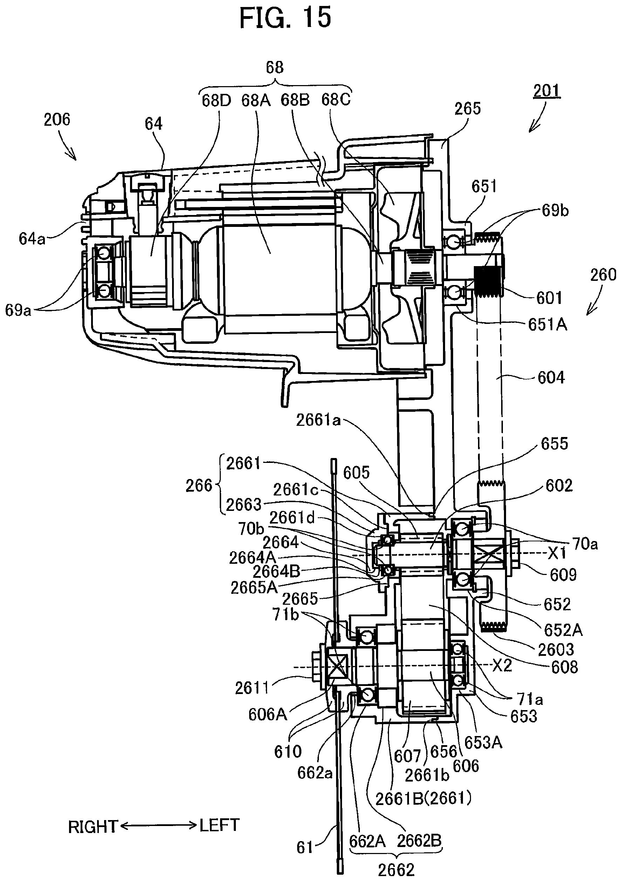

Next, a fourth embodiment of the present invention will be described with reference to Figs. 15 to 19. The present embodiment differs from the first and second embodiments in that a gear cover is constituted by two separate members. Incidentally, like parts and components are designated by the same reference numerals as those shown in the first and second embodiments to avoid duplicating description, and a structure different from the first and second embodiments will be described.

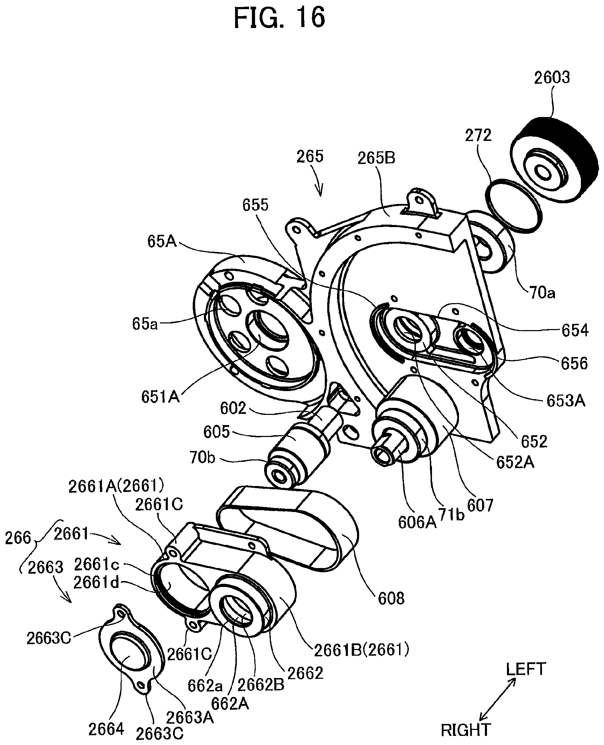

Fig. 15 illustrates an inside of a cutting unit 206 of a miter saw 201 according to the fourth embodiment. Fig. 15 is a sectional view taken along the A-A plane indicated in Fig. 1. Fig. 16 is an exploded perspective view illustrating a configuration of a portion of the cutting unit 206 of the miter saw 201 according to the fourth embodiment. As illustrated in Fig. 15, the cutting unit 206 includes the motor 68, a transmission mechanism unit 260, and the cutting blade 61.

Similar to the transmission mechanism 60 according to the first and second embodiments, the transmission mechanism unit 260 is configured to transmit rotation of the motor 68 to the cutting blade 61 in a two-stage belt system. As illustrated in Fig. 15, the transmission mechanism unit 260 includes the first pulley 601, the countershaft 602, a second pulley 2603, the first belt 604, the third pulley 605, the fourth pulley 607, and the second belt 608.

The second pulley 2603 is a V-pulley. The second pulley 2603 has a function similar to that of the second pulley 603 of the first and second embodiments. As illustrated in Figs. 15 and 16, the second pulley 2603 has a cylindrical shape extending in the rightward/leftward direction. A groove extending in a circumferential direction is formed in an outer peripheral surface of the second pulley 2603. The second pulley 2603 has an outer diameter greater than an outer diameter of the first pulley 601. The second pulley 2603 is fitted on an outer surface of a left end portion of the countershaft 602 projecting out of a gear case 265 via a washer 272 and fixed with a fastener 609 at the outside (left side) of the gear case 265. The second pulley 2603 is configured to corotate with the countershaft 602. The second pulley 2603 is an example of the second pulley in the present invention.

Next, the shape of the gear case 265 in the miter saw 201 according to the fourth embodiment will be described with reference to Fig. 16. The gear case 265 of the fourth embodiment differs from the gear case 65 of the first embodiment in a structure in which a pair of protrusions 655 and 656 is provided around a groove 654.

The gear case 265 supports the bearing 69b, the bearing 70a, and the bearing 71a. As illustrated in Fig. 16, the gear case 265 is formed integrally by the gear case 65A and a gear case 265B. The gear case 265 is an example of the first support member in the present invention.

The gear case 265B has substantially elliptical right and left side surfaces. The groove 654 having a substantially elliptical cross-section is formed at a center portion of the right side surface of the gear case 265B. The protrusion 655 and the protrusion 656 are provided at positions outside of intersections each between a major axis of the groove 654 and elliptical arcs of the groove 654.

The protrusion 655 has an elliptical arc shape. The protrusion 655 is provided in the vicinity of the support 652A that supports the bearing 70a. The protrusion 655 projects rightward from the right side surface of the gear case 65B. The protrusion 656 has an elliptical arc shape substantially identical to the protrusion 655. The protrusion 656 is provided in the vicinity of the support 653A that supports the bearing 71a. The protrusion 656 projects rightward from the right side surface of the gear case 65B. The protrusion 655 and the protrusion 656 have substantially equal lengths in their projecting direction, that is, in the rightward/leftward direction. The protrusion 655 and the protrusion 656 are an example of a first positioning portion in the present invention.

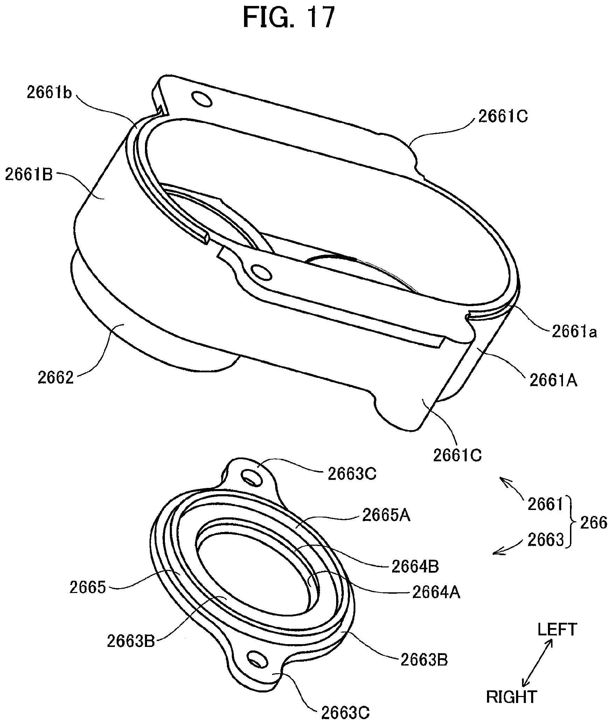

Next, a shape of a gear cover 266 of the miter saw 201 according to the fourth embodiment will be described in detail with reference to Figs. 15, 16, and 17. Fig. 17 is an exploded perspective view illustrating the shape of the gear cover 266 of the miter saw 201 according to the fourth embodiment.

As illustrated in Fig. 16, the gear cover 266 is disposed on the right side of the gear case 265. The gear cover 266 supports the bearing 70b and the bearing 71b. The gear cover 266 is an example of the second support member in the present invention. The gear case 265 and the gear cover 266 are an example of the support base.

In the fourth embodiment, as illustrated in Figs. 16 and 17, the gear cover 266 includes a bearing holder 2661 and a bearing holder 2663. The bearing holder 2661 supports the bearing 71b. The bearing holder 2661 is an example of a first support portion in the present invention. The bearing holder 2663 supports the bearing 70b, and is an example of a second support portion in the present invention.

As illustrated in Figs. 16 and 17, the bearing holder 2661 has a cylindrical shape having a substantially elliptical cross-section and extending in the rightward/leftward direction. The bearing holder 2661 is so disposed as to cover the groove 654 in the gear case 265. The bearing holder 2661 is formed integrally by a bearing holder 2661A and a bearing holder 2661B.

The bearing holder 2661B supports the bearing 71b. A protrusion 2662 is provided on a right side surface of the bearing holder 2661B. The protrusion 2662 projects outward (rightward). The protrusion 1662 has a cylindrical shape extending in the rightward/leftward direction. The protrusion 2662 includes a support part 662A and an insertion portion 2662B.

The support part 662A has a cylindrical inner peripheral surface extending in the rightward/leftward direction. A left end portion of the support part 662A is open. A right end portion of the support part 662A has a circular ring shape having an opening 662a formed at its center portion. The support part 662A is formed such that the opening 662a has an inner diameter greater than an outer diameter of the spindle 606. An inner diameter of the inner peripheral surface of the support part 662A is substantially equal to an outer diameter of the bearing 71b. As illustrated in Fig. 15, the bearing 71b is fitted and fixed inside the support 662A. The support part 662A is an example of the second support part in the present invention.

The insertion portion 2662B is connected adjacent to a left side of the support 662A. The insertion portion 2662B has a cylindrical inner peripheral surface extending in the rightward/leftward direction. Right and left ends of the insertion portion 2662B are open. An inner diameter of the inner peripheral surface of the insertion portion 2662B is greater than the inner diameter of the inner peripheral surface of the support part 662A and the outer diameter of the bearing 71b. The spindle 606 penetrates through the insertion portion 2662B. The inner diameter of the inner peripheral surface of the insertion portion 2662B may be substantially equal to the inner diameter of the inner peripheral surface of the support part 662A and the outer diameter of the bearing 71b.

As illustrated in Fig. 17, a stepped portion 2661b is formed in an outer peripheral surface of the bearing holder 2661B. The stepped portion 2661b is formed by cutting out a left end portion of the outer peripheral surface of the bearing holder 2661B in an elliptical arc shape. The shape of a cutout is substantially identical to the shape of the protrusion 656 on the gear case 265B. Specifically, the stepped portion 2661b has a shape engageable with the protrusion 656.

As illustrated in Fig. 15, the bearing holder 2661A extends from the bearing holder 2661B so as to cover the countershaft 602. A through-hole 2661d is formed in the bearing holder 2661A, and the through-hole 2661d opposes a right end portion of the countershaft 602. The through-hole 2661d is a substantially cylindrical hole penetrating the bearing holder 2661A in the rightward/leftward direction. The through-hole 2661d has an inner diameter greater than an outer diameter of the bearing 70b. The through-hole 2661d is an example of a through-hole in the present invention.

A pair of cylindrical portions 2661C is provided on an outer peripheral surface of the bearing holder 2661A. Fasteners, such as screws, are to be inserted into the cylindrical portions 2661C. As illustrated in Fig. 16, the cylindrical portions 2661C each have a substantially cylindrical shape extending in the rightward/leftward direction. The cylindrical portions 2661C are disposed at positions symmetric about the countershaft 602. In the present embodiment, the cylindrical portions 2661C are provided at a position farthest from the motor shaft 68B and a position closest to the motor shaft 68B on the outer peripheral surface of the bearing holder 2661A.

As illustrated in Fig. 17, a stepped portion 2661a is formed in the outer peripheral surface of the bearing holder 2661A. The stepped portion 2661a is formed by cutting out a left end portion of the outer peripheral surface of the bearing holder 2661A in an elliptical arc shape. The shape of this cutout is substantially identical to the shape of the protrusion 655 on the gear case 265B. Specifically, the stepped portion 2661a has a shape engageable with the protrusion 655.

The stepped portion 2661a formed in the bearing holder 2661A and the stepped portion 2661b formed in the bearing holder 2661B constitute a pair, and this pair forms a complementary structure with the pair of the protrusion 655 and the protrusion 656 provided on the gear case 265B. As the stepped portion 2661a and the stepped portion 2661b engage with the protrusion 655 and the protrusion 656, respectively, the bearing holder 2661 is positioned relative to the gear case 265, and the movement of the bearing holder 2661 in radial directions of the countershaft 602 and the spindle 606 is restricted. The stepped portion 2661a and the stepped portion 2661b are an example of the first positioning portion in the present invention.

A stepped portion 2661c is provided in the bearing holder 2661A at an open end in a right side end portion of the through-hole 2661d. The stepped portion 2661c is formed by cutting out a right side surface of the bearing holder 2661A in a circular ring shape along an outer periphery of the open end of the through-hole 2661d. An inner diameter of the stepped portion 2661c coincides with an inner diameter of the through-hole 2661d. A diameter of the stepped portion 2661c at a radially outward side will be referred to as a diameter of the open end of the through-hole 2661d. The stepped portion 2661c is an example of a second positioning portion in the present invention

As illustrated in Fig. 15, the bearing holder 2663 is so disposed as to cover the open end of the through-hole 2661d on the right side of the bearing holder 2661. As illustrated in Fig. 16, the bearing holder 2663 includes a pair of projections 2663C provided on an outer peripheral portion. The bearing holder 2663 has a substantially disc shape having an outer diameter greater than the diameter of the open end of the through-hole 2661d.

The pair of projections 2663C each project outward from the outer peripheral portion of the bearing holder 2663 in the radial direction of the countershaft 602. The projections 2663C are provided at positions corresponding to the respective cylindrical portions 2661C provided on the bearing holder 2661. A through-hole is formed at a center portion of each projection 2663C. A fastener, such as a screw, is to be inserted into this through-hole.

A protrusion 2664 is provided at a center portion of the bearing holder 2663. The protrusion 2664 has a cylindrical shape extending in the rightward/leftward direction. A right end portion of the protrusion 2664 projects further rightward than the projections 2663C of the bearing holder 2663. A left end of the protrusion 2664 is connected to a left side surface 2663B of the bearing holder 2663. An inside of the protrusion 2664 has a two-step form. A lid 2664A and a connecting portion 2664B are disposed side by side in the rightward/leftward direction.

The lid 2664A has a cylindrical inner peripheral surface extending in the rightward/leftward direction. A left end portion of the lid 2664A is open. A right end portion of the lid 2664A is covered by a right side surface 2663A of the bearing holder 2663. The inner peripheral surface of the lid 2664A has an inner diameter smaller than the outer diameter of the bearing 70b and greater than the outer diameter of the countershaft 602 and an inner diameter of the bearing 70b.

The connecting portion 2664B is connected adjacent to a left side of the lid 2664A. The connecting portion 2664B has a tapered inner peripheral surface extending in the rightward/leftward direction. Right and left ends of the connecting portion 2664B are open. The connecting portion 2664B is inclined inward in the radial direction of the countershaft 602 along a direction toward the lid 2664A, that is, along a direction toward the right side, and a diameter of the connecting portion 2664B thus decreases. An inner diameter of the inner peripheral surface of the connecting portion 2664B is equal to the inner diameter of the lid 2664A at the right end portion of the connecting portion 2664B. The left end of the connecting portion 2664B connects to the left side surface 2663B of the bearing holder 2663.

A protrusion 2665 is provided on the left side surface 2663B of the bearing holder 2663. The protrusion 2665 has a cylindrical shape extending in the rightward/leftward direction. The protrusion 2665 includes a support part 2665A. The protrusion 2665 has an outer diameter substantially equal to the diameter of the open end of the through-hole 2661d. The length of a portion of the outer peripheral surface of the protrusion 2665 projecting from the left side surface 2663B, that is, the length of that portion in the rightward/leftward direction is substantially equal to the length, in the rightward/leftward direction, of the portion cut out from the bearing holder 2661A. Specifically, the protrusion 2665 has a shape engageable with the stepped portion 2661c. The protrusion 2665 forms a spigot structure with the stepped portion 2661c. As the protrusion 2665 and the stepped portion 2661c engage with each other, the movement of the bearing holder 2663 in the radial direction of the countershaft 602 is restricted. The protrusion 2665 is an example of a second engagement portion in the present invention.

The support part 2665A has a cylindrical inner peripheral surface extending in the rightward/leftward direction. A left end portion of the support part 2665A is open. A right end portion of the support part 2665A connects to the left side surface 2663B of the bearing holder 2663. The support part 2665A is located on the left side of the connecting portion 2664B. An inner diameter of the inner peripheral surface of the support part 2665A is greater than an inner diameter of the inner peripheral surface of the lid 2664A and an inner diameter of the inner peripheral surface of the connecting portion 2664B and substantially equal to the outer diameter of the bearing 70b. A length of the support part 2665A in the rightward/leftward direction is smaller than a length of the bearing 70b in the rightward/leftward direction (axial direction). The length of the support part 2665A in the rightward/leftward direction may be substantially equal to the length of the bearing 70b in the rightward/leftward direction (axial direction) or may be greater than the length of the bearing 70b in the rightward/leftward direction (axial direction). As illustrated in Fig. 15, the bearing 70b is disposed inside the support part 2664C. The support part 2665A is an example of the first support part in the present invention.

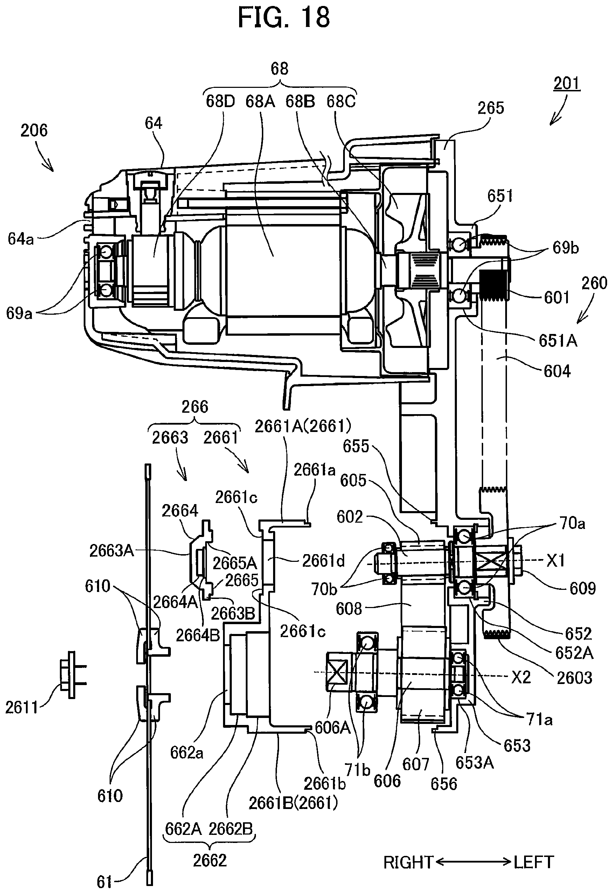

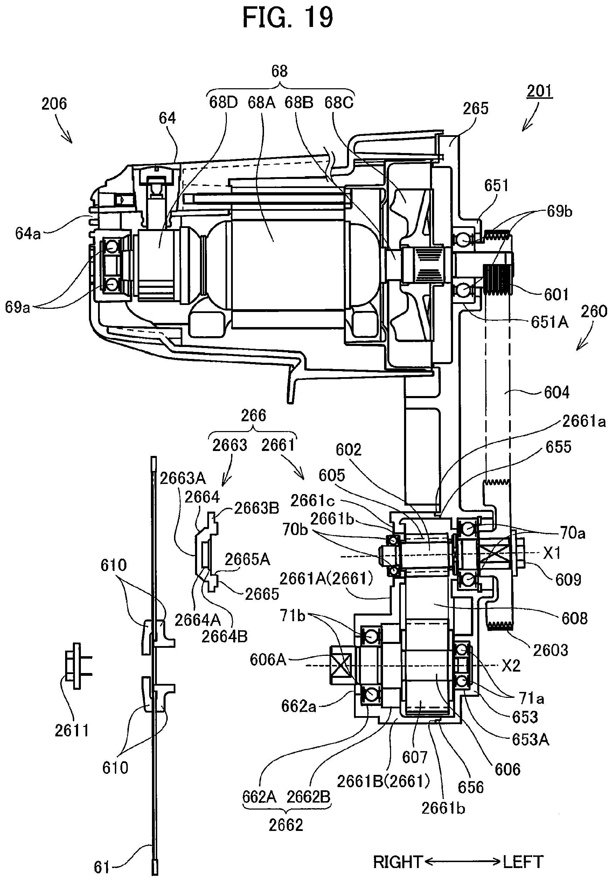

Next, a process of assembling the cutting unit 206 of the miter saw 201 according to the fourth embodiment will be described with reference to Figs. 15, 18, and 19. Figs. 18 and 19 each illustrate an inside of the cutting unit 206 of the miter saw 201 according to the third embodiment. Figs. 18 and 19 are illustrations for describing an assembly process. In the present embodiment, the motor shaft 68B, the countershaft 602, and the spindle 606 are attached to the gear case 265 via the bearing 69b, the bearing 70a, and the bearing 71a. Then, the gear cover 266 is attached to the gear case 265. A method of attaching the motor shaft 68B, the countershaft 602, and the spindle 606 to the gear case 265 is similar to that of the first embodiment, and thus detailed descriptions thereof will be omitted.

The bearing 69b, the bearing 70a, and the bearing 71a are fixed to the gear case 265, and the left sides of the motor shaft 68B, the countershaft 602, and the spindle 606 are positioned relative to the gear case 265. The first pulley 601, the second pulley 2603, and the first belt 604 are attached to predetermined positions. The first pulley 601, the second pulley 2603, and the first belt 604 may be attached after the gear cover 266 is attached.

Next, as illustrated in Fig. 18, the second belt 608 is looped under tension over the third pulley 605 and the fourth pulley 607. At this point, due to the tension of the second belt 608, the unfixed right end portion of the countershaft 602 tilts in a direction approaching the spindle 606, and the unfixed right end portion of the spindle 606, that is, the side where the mounting portion 606A is provided tilts in a direction approaching the countershaft 602.

Fig. 18 illustrates an axis X1 of the countershaft 602 and an axis X2 of the spindle 606. After the second belt 608 is looped under tension, the axis X1 and the axis X2 tilt so as to approach each other along the rightward direction. A distance between the two axes X1 and X2 does not vary at the positions of the bearing 70a and the bearing 71a before and after the second belt 608 is looped under tension. However, the distance between the two axes X1 and X2 is reduced at the positions of the third pulley 605 and the fourth pulley 607 upon the second belt 608 being looped under tension. The distance between the two axes X1 and X2 is further reduced at the positions of the bearing 70b, the bearing 71b, and the mounting portion 606A provided further rightward.

In this tilted state, the gear cover 266 is attached to the gear case 265 from the right side. In the present embodiment, the bearing holder 2661 is attached to the gear case 265, first. Then, the bearing holder 2663 is attached to the bearing holder 2661.

Prior to attaching the bearing holder 2661 to the gear case 265, as illustrated in Fig. 18, the bearing 70b and the bearing 71b are attached to the countershaft 602 and the spindle 606, respectively. The bearing holder 2661 and the bearing holder 2663 may be attached to each other after the bearing 70b and the bearing 71b are attached to the bearing holder 2663 and the bearing holder 2661 from the left side, respectively. Prior to attaching the countershaft 602 and the spindle 606 to the gear case 265, the bearing 70b and the bearing 71 may be attached to the countershaft 602 and the spindle 606, respectively.

The second belt 608 is looped under tension, and the bearing holder 2661 is brought closer to the countershaft 602 with a tilted axis X1 and the spindle 606 with a tilted axis X2 from the right side (the gear cover 266 is brought closer from the left side). At this point, the spindle 606 extending further to the right side than the countershaft 602 enters the bearing holder 2661 before the countershaft 602 does.

The right end portion of the spindle 606, that is, the mounting portion 606A passes through the insertion portion 2662B and enters the support 662A. The inner diameter of the insertion portion 2662B is greater than the outer diameters of the spindle 606 and the bearing 71b, and the inner diameter of the support part 662A is greater than the outer diameter of the spindle 606. Therefore, the mounting portion 606A can easily enter the support part 662A with the spindle 606 remaining in a tilted state.

The inner diameter of the support part 662A and the outer diameter of the bearing 71b are substantially equal to each other. Thus, upon the portion of the spindle 606 where the bearing 71b is attached reaching the inside of the support 662A, an outer peripheral surface of the bearing 71b abuts the inner peripheral surface of the support 662A. In this abutting state, the spindle 606 with the bearing 71b attached thereto is pressed and fitted into the support 662A. Thus, the tilted state of the spindle 606 is corrected, and the bearing 71b is fitted and fixed in the support 662A.

At this point, the right end portion of the countershaft 602 where the bearing 70b is attached also enters the bearing holder 2661 and reaches the inside of the through-hole 2661d. However, the inner diameter of the through-hole 2661d is greater than the outer diameters of the countershaft 602 and the bearing 70b. Thus, the right end portion of the countershaft 602 can easily pass through the through-hole 2661d in a tilted state.

The bearing 71b is fixed inside the support 662A, and the bearing holder 2661 abuts the right side surface of the gear case 265. Then, as illustrated in Fig. 19, the protrusion 655 and the protrusion 656 on the gear case 265 are made to engage with, respectively, the stepped portion 2661a and the stepped portion 2661b of the bearing holder 2661. Thus, the bearing holder 2661 is positioned relative to the gear case 265, and the tilted state of the spindle 606 is further corrected. In this state, the bearing holder 2661 is fixed to the gear case 265 with a fastener, such as a screw.

At this point, as illustrated in Fig. 19, the mounting portion 606A of the spindle 606 projects rightward through the opening 662a in the protrusion 2662, and the countershaft 602 with the bearing 70b mounted thereon projects rightward out of the open end of the through-hole 2661d. Although the tilted state of the axis X1 of the countershaft 602 is retained, the tilted state of the axis X2 of the spindle 606 is corrected. Therefore, at the positions of the third pulley 605 and the fourth pulley 607, the distance between the two axes X1 and X2 becomes closer or substantially equal to the distance held before the second belt 608 is looped under tension. Meanwhile, at the positions of the bearing 70b, the bearing 71b, and the mounting portion 606A, the distance between the two axes X1 and X2 becomes greater than the distance held before the bearing holder 2661 is attached. However, since the axis X1 of the countershaft 602 is tilted, the distance is smaller than the distance held before the second belt 608 is looped under tension.

Next, the bearing holder 2663 is attached to the bearing holder 2661. The bearing holder 2663 is brought closer to the right end portion of the countershaft 602 with a tilted axis X1 from the right side. The outer diameter of the countershaft 602 is smaller than the inner diameters of the support part 2665A, the connecting portion 2664B, and the lid 2664A. Therefore, the right end portion of the countershaft 602 passes through the support part 2665A with the countershaft 602 remaining in a tilted state and can easily enter the connecting portion 2664B and the lid 2664A.

The inner diameter of the support part 2665A and the outer diameter of the bearing 70b are substantially equal to each other. Thus, upon the portion of the countershaft 602 where the bearing 70b is attached reaching the inside of the support part 2665A, the outer peripheral surface of the bearing 70b abuts the inner peripheral surface of the support part 2665A. In this abutting state, the countershaft 602 with the bearing 70b attached thereto is pressed and fitted into the support part 2665A. Thus, the bearing 70b is fitted and fixed in the support part 2665A. At this point, the right end portion of the countershaft 602 is disposed inside the lid 2664A.

The bearing 70b is fixed inside the support part 2665A, and the bearing holder 2663 abuts the bearing holder 2661. Then, as illustrated in Fig. 15, the protrusion 2665 on the bearing holder 2663 is made to engage with the stepped portion 2661c of the bearing holder 2661. Thus, the bearing holder 2663 is positioned relative to the bearing holder 2661, and the tilted state of the countershaft 602 is corrected. In this state, the bearing holder 2663 is fixed to the bearing holder 2661 with a fastener, such as a screw.

As described above, as the bearing holder 2663 is fixed to the bearing holder 2661, the tilted state of the axis X1 of the countershaft 602 is corrected, and the distance between the two axes X1 and X2 becomes substantially equal to the distance held before the second belt 608 is looped under tension throughout the countershaft 602 and the spindle 606. In other words, each member can be positioned with high accuracy.

Thereafter, the cutting blade 61 is mounted to the mounting portion 606A of the spindle 606 via a fastener 2611.

As described thus far, in the miter saw 201 according to the present embodiment, the gear cover 266 is divided into the bearing holder 2661 and the bearing holder 2663, the bearing 70b only is supported by the bearing holder 2661, and the bearing 70a only is supported by the bearing holder 2663. Therefore, the bearings 70b and 70a can be easily inserted and fitted in the bearing holders 2661 and 2663. In addition, even in a case where the countershaft 602 and the spindle 606 tilt due to the tension of the second belt 608 during assembly, the tilted state of each of the countershaft 602 and the spindle 606 can be corrected separately. Accordingly, assembleability can be further improved.

By making the pair of protrusions 655 and 656 provided on the gear case 265 engage with the pair of steps 2661a and 2661b formed in the bearing holder 2661, tilting of the spindle 606 can be easily and reliably corrected. By making the protrusion 2665 provided on the bearing holder 2663 engage with the stepped portion 2661c formed in the bearing holder 2661, tilting of the countershaft 602 can be easily and reliably corrected. Therefore, the distance between the axes X1 and X2 of the countershaft 602 and the spindle 606 can be reliably corrected, and assembly with high positioning accuracy can be achieved. Accordingly, assembleability and mass productivity can be improved.

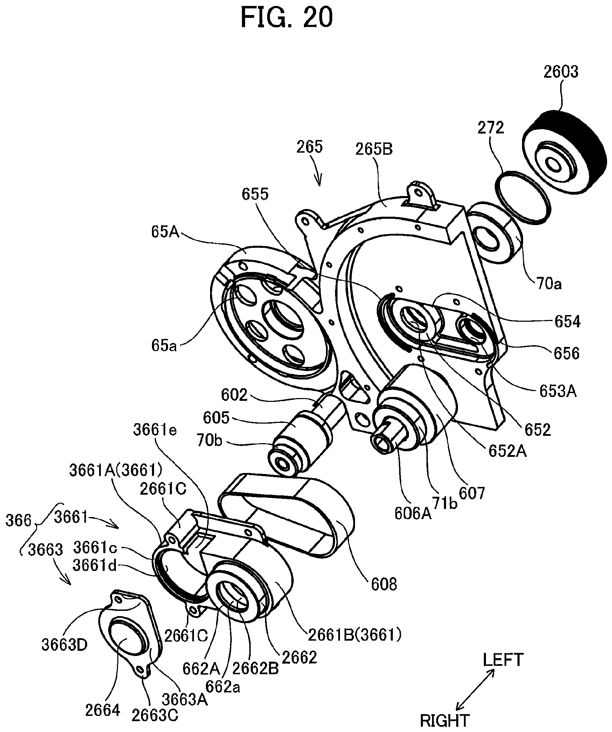

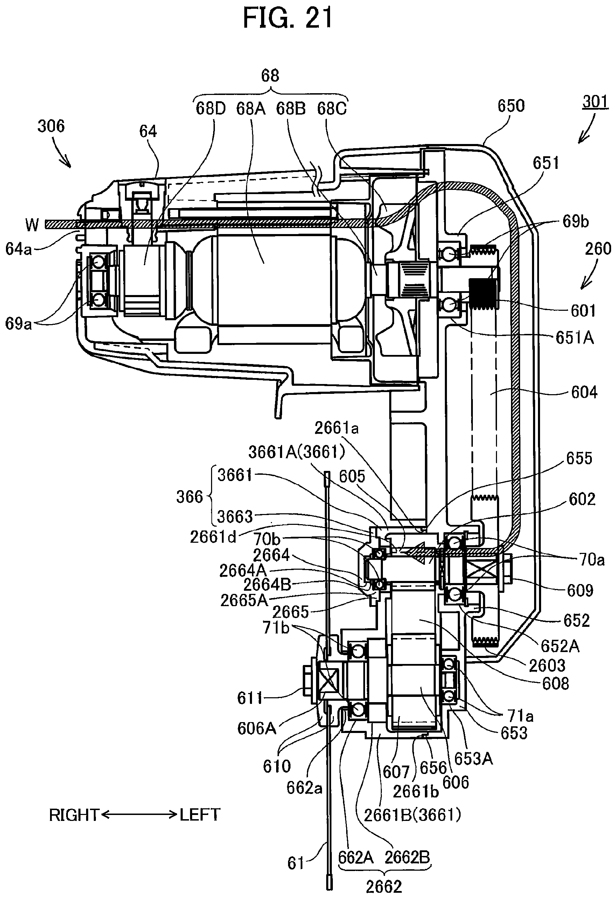

Next, a fifth embodiment of the present invention will be described with reference to Figs. 20 and 21. The present embodiment differs from the first to fourth embodiments in a configuration in which an air hole is provided in a gear cover. Incidentally, like parts and components are designated by the same reference numerals as those of the foregoing embodiments to avoid duplicating description, and a structure different from the foregoing embodiments will only be described.

Fig. 20 is an exploded perspective view illustrating a configuration of a portion of a cutting unit 306 of a miter saw 301 according to the fifth embodiment. Fig. 21 is an illustration for describing a flow of a cooling air W in the miter saw 301 according to the fifth embodiment. Fig. 21 is a sectional view taken along the A-A plane indicated in Fig. 1.

As illustrated in Fig. 20, a gear cover 366 is disposed on the right side of a gear case 265. The gear cover 366 supports the bearing 70b and the bearing 71b. The gear cover 366 is an example of the second support member in the present invention. Further, the gear case 265 and the gear cover 366 are an example of the support base in the present invention.

The gear cover 366 includes a bearing holder 3661 and a bearing holder 3663. The bearing holder 3661 supports the bearing 71b, and is an example of a first support portion in the present invention. The bearing holder 3663 supports the bearing 70b, and is an example of a second support portion in the present invention.

The bearing holder 3661 is formed integrally by a bearing holder 3661A and a bearing holder 2661B. The bearing holder 3661 is so disposed as to cover a groove 654 in the gear case 265.

As illustrated in Fig. 21, the bearing holder 3661A extends from the bearing holder 2661B so as to cover the countershaft 602. A through-hole 3661d is formed in the bearing holder 3661A, and the through-hole 3661d opposes a right end portion of the countershaft 602. The through-hole 3661d has an inner diameter greater than an outer diameter of the bearing 70b. The through-hole 3661d is an example of the through-hole in the present invention.

As illustrated in Fig. 20, a notch 3661e is formed in an outer peripheral surface of the bearing holder 3661A. The notch 3661e has a rectangular shape extending leftward from an open end on a right side end portion of the through-hole 3661d. The notch 3661e is formed at an outer surface of the bearing holder 3661A at a position adjacent to one of the cylindrical portions 2661C which is closer to the motor shaft 68B than the other cylindrical portion 2661C is to the motor shaft 68B. The notch 3661E is also adjacent to the cylindrical portion 2661C. The notch 3661e is an example of a notch in the present invention.

A stepped portion 3661c is formed in the bearing holder 3661A at the open end of the through-hole 3661d. The stepped portion 3661c is formed by cutting out a right side surface of the bearing holder 3661A in a circular arc shape along an outer periphery of the open end of the through-hole 3661d. The through-hole 3661d and the stepped portion 3661c are identical in shape to the through-hole 2661d and the stepped portion 2661c of the fourth embodiment except that the through-hole 3661d and the stepped portion 3661c are partially cut out to form the notch 3661e.

As illustrated in Fig. 21, the bearing holder 3663 is so disposed as to cover the open end of the through-hole 3661d on the right side of the bearing holder 3661. As illustrated in Fig. 20, the bearing holder 3663 includes a main body 3663A, a projection 2663C, and a projection 3663D.

The main body 3663A has a substantially circular disc shape having an outer diameter greater than a diameter of the open end of the through-hole 3661d. The main body 3663A covers a right side end portion of a protrusion 2664 provided at a center portion of the bearing holder 3663.

The projection 2663C is provided at a position corresponding to the one cylindrical portion 2661C of the two cylindrical portions 2661C on the bearing holder 3661 that is farther from the motor shaft 68B. A through-hole is formed in the projection 2663C, and a fastener, such as a screw, is to be inserted into the through-hole. As illustrated in Fig. 19, the projection 2663C projects outward in a radial direction of the countershaft 602, that is, projects in a direction away from the motor shaft 68B.

The projection 3663D is provided at a position corresponding to the notch 3661e and the one cylindrical portion 2661C of the two cylindrical portions 3661C on the bearing holder 3661 that is closer to the motor shaft 68B. The projection 3663D projects from the main body 3663A outward in the radial direction of the countershaft 602, that is, projects in a direction approaching the motor shaft 69B. The projection 3663D covers a right end portion of the cylindrical portion 2661C and an open end of the notch 3661e. The projection 3663D projects further outward in the radial direction of the countershaft 602 than the open end of the notch 3661e. A through-hole is provided in the projection 3663D at a position corresponding to the cylindrical portion 2661C, and a fastener, such as a screw, is to be inserted into the through-hole. The protrusion 3663D is an example of a closure portion in the present invention.

A process of assembling the cutting unit 306 of the miter saw 301 according to the fifth embodiment is similar to that of the fourth embodiment, and thus descriptions thereof will be omitted.

The bearing holder 3663 is attached to the bearing holder 3661. Then, the open end of the notch 3661e is closed by a projection 3661D, and an air hole is defined in the gear cover 366. This air hole is disposed in the vicinity of a portion on the outer peripheral surface of the countershaft 602 where the bearing 70b is attached. The projection 3661D further projects in a direction approaching the motor shaft 68B at the right side of the air hole.

Fig. 21 illustrates a flow of a cooling air within a housing of the miter saw 301 by an arrow W. When the motor 68 starts running and the fan 68C corotates with the motor shaft 68B, the cooling air W is produced by an outside air sucked in through an intake port 64a of the motor housing 64. After passing through a discharge port 65a provided in the gear case 65A, the cooling air W travels in a direction from the first pulley 601 toward the second pulley 603 within the gear housing 650 and enters the inside of the gear case 265 through a position where the second pulley 603 is attached. Then, the cooling air W travels along the countershaft 602 inside the gear case 265 and the gear cover 366 and is discharged to the outside of the gear case 265 and the gear cover 366 through the air hole defined in the gear cover 366. A flow of the discharged cooling air W in a direction toward the cutting blade 61 is shut off by a projecting portion of the projection 3661D.

As described thus far, in the miter saw 301 according to the present embodiment, the air hole is defined in the gear cover 366, and the cooling air W produced through rotation of the fan 68C travels to the vicinity of the bearing 70b along the countershaft 602 within the gear case 265 and the gear cover 366, and this cooling air W is discharged through the air hole. Therefore, even in a case where the temperature of the countershaft 602, the bearing 70b, and the spindle 606 rises to a high temperature due to the heat produced in the second belt 608 while the miter saw 301 is in use, such components can be cooled efficiently with the cooling air W. A portion of the air hole which is closer to the cutting blade 61 than a remaining of the air hole is to the cutting blade 61 is closed by the projection 3661D of the gear cover 366. Thus, entry of cutting dust into the gear cover 366 can be suppressed during cutting work with the cutting blade 69. Accordingly, suspension of work due to a high temperature or entry of a foreign object can be suppressed, and improved operability and improved tool durability are provided. The projection 3661D projects from the open end of the notch 3661e in a direction approaching the motor shaft 68B. Thus, entry of cutting dust can be suppressed effectively.

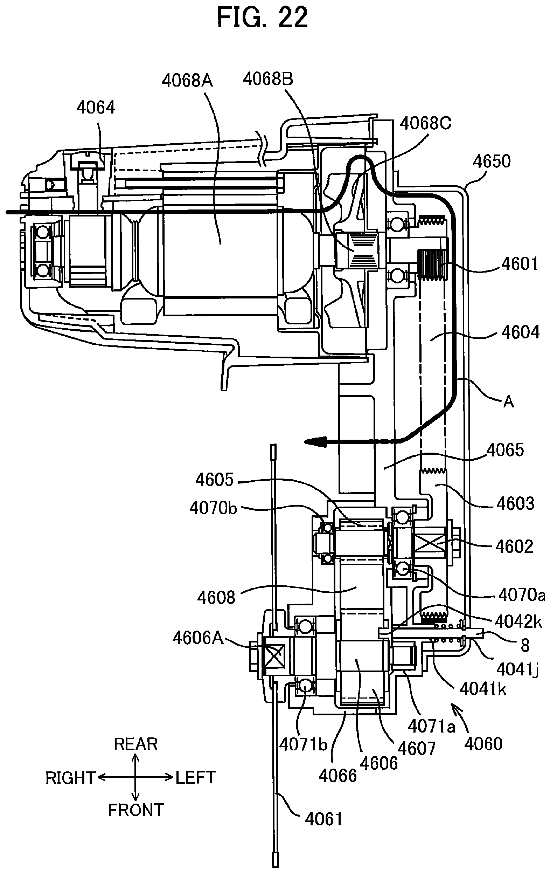

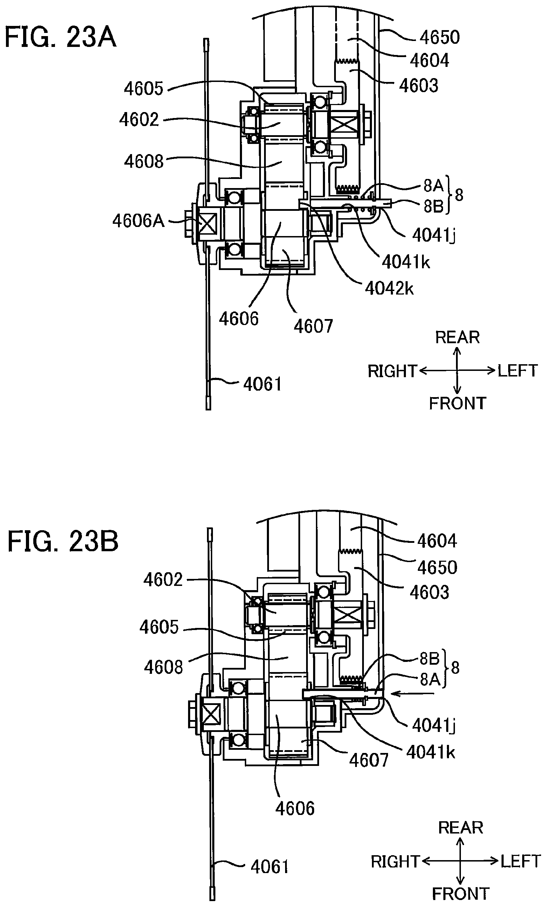

Next, a sixth embodiment of the present invention will be described with reference to Figs. 22 and 23. A miter saw according to the sixth embodiment differs from that of the first embodiment in that a lock mechanism described later is added to the cutting unit 6. The two embodiments are in common in other respects. Hereinafter, a modified cutting unit 6 will be described. In the sixth embodiment, the guide in the first embodiment is omitted.

As illustrated in Fig. 22, the miter saw according to the sixth embodiment includes a gear housing 4650, a motor housing 4064, a saw cover 41C, and a gear case 4065. The motor housing 4064 houses a motor body 4068A.

The gear housing 4650 houses therein a portion of a transmission mechanism unit 4060. The gear case 4065 is fixed to the right side of the gear housing 4650. The motor housing 4064 is fixed to the right side of the gear case 4065. A through-hole 4041j is provided in a front portion of the gear housing 4650, and the through-hole 4041j penetrates a left side surface of the gear housing 4650 in the rightward/leftward direction.

The motor housing 4064 has a shape extending rightward from an upper portion of the gear housing 4650. The motor housing 4064 is disposed above a cutting blade 4061. The motor body 4068A is housed inside the motor housing 4064. As illustrated in Fig. 22, the motor body 4068A includes a motor shaft 4068B. The motor shaft 4068B projects leftward. A fan 4068C and a first pulley 4601 are so mounted to the motor shaft 4068B as to rotate coaxially and integrally.

The gear case 4065 is fixed to the gear housing 4650 with a screw. The gear case 4065 accommodates therein a bearing 4070a and a bearing 4071a. The bearing 4070a includes a housing washer and a shaft washer, and a plurality of balls is provided between the housing washer and the shaft washer. A gear cover 4066 is attached to the right side of the gear case 4065. The housing washer of the bearing 4070a is fixed to the gear case 4065. The bearing 4071 a is a slide metal piece and has a diameter smaller than that of the bearing 4070a. Thus, the size of a portion that supports the bearing 4071a can be reduced. A through-hole 4041k is provided in a front portion of the gear case 4065, and the through-hole 4041k penetrates the gear case 4065 in the rightward/leftward direction.

A portion of the transmission mechanism unit 4060 is housed and supported between the gear case 4065 and the gear cover 4066. The gear cover 4066 is so mounted to a first housing 41 as to cover a portion of the transmission mechanism unit 4060. The gear cover 4066 accommodates therein a bearing 4071b. The bearing 4071b includes a housing washer and a shaft washer, and a plurality of balls is provided between the housing washer and the shaft washer. The housing washer of the bearing 4071b is fixed to the gear cover 4066. The bearing 4071b has a diameter greater than that of the bearing 4071a.

As illustrated in Fig. 22, the transmission mechanism unit 4060 includes the first pulley 4601, a second pulley 4603, a first belt 4604, a countershaft 4602, a third pulley 4605, a fourth pulley 4607, a second belt 4608, and a spindle 4606. The first belt 4604 is looped under tension over the first pulley 4601 and the second pulley 4603. The countershaft 4602 is coaxially bonded to the second pulley 4603. The third pulley 4605 has a diameter smaller than that of the second pulley 4603 and is coaxially mounted to the countershaft 4602. The fourth pulley 4607 is disposed frontward of the third pulley 4605 with a space provided therebetween. The second belt 4608 is looped under tension over the third pulley 4605 and the fourth pulley 4607. The spindle 4606 is coaxially bonded to the fourth pulley 4607. The second belt 4608 is a timing belt.

The countershaft 4602, the third pulley 4605, the spindle 4606, the fourth pulley 4607, and the second belt 4608 are supported and housed between the gear case 4065 and the gear cover 4066.

The first pulley 4601 is substantially circular as viewed in a side view in the rightward/leftward direction and has a substantially columnar shape with an axis extending in the rightward/leftward direction. The first pulley 4601 is so mounted as to be coaxial with the motor shaft 4068B at a left end portion of the motor shaft 4068B of the motor body 4068A. A plurality of grooves is formed in an outer peripheral surface of the first pulley 4601, and the plurality of grooves extends along a circumferential direction. The plurality of grooves is formed parallel to each other and arrayed in the rightward/leftward direction.

The second pulley 4603 is substantially circular as viewed in a side view in the rightward/leftward direction and has a substantially cylindrical shape with an axis extending in the rightward/leftward direction. Similarly to the first pulley 4601, a plurality of grooves is formed in an outer peripheral surface of the second pulley 4603, and the plurality of grooves extends along a circumferential direction. The plurality of grooves in the second pulley 4603 is disposed parallel to each other and arrayed in the rightward/leftward direction in the outer peripheral surface of the second pulley 4603. The second pulley 4603 is mounted coaxially with the countershaft 4602.

The first belt 4604 is looped under tension over the first pulley 4601 and the second pulley 4603 (Figs. 23A and 23B). The first belt 4604 is a V-belt. A width of the first belt 4604 in the rightward/leftward direction is substantially equal to a width of the first pulley 4601 and a width of the second pulley 4603. The first belt 4604 is an endless belt. A plurality of protrusions is formed on an inner peripheral surface of the first belt 4604. The plurality of protrusions is arrayed in the widthwise direction of the first belt 4604 and extends in a circumferential direction of the belt. The plurality of protrusions engages with the plurality of grooves formed in the outer peripheral surface of each of the first pulley 4601 and the second pulley 4603. As the first belt 4604 engages with and is looped under tension over the first pulley 4601 and the second pulley 4603, the first belt 4604 can transmit rotation of the first pulley 4601 to the second pulley 4603. The first pulley 4601 and the second pulley 4603 are each a V-pulley.

The countershaft 4602 is a substantially cylindrical member having an axis extending in the rightward/leftward direction. A left end portion of the countershaft 4602 is rotatably supported by the bearing 4070a. A right end portion of the countershaft 4602 is rotatably supported by the gear cover 4066 via a bearing 4070b. The third pulley 4605 is coaxially mounted to the right end portion of the countershaft 4602.

The third pulley 4605 is a substantially cylindrical member extending in the rightward/leftward direction. The third pulley 4605 is a timing pulley. A plurality of gear teeth is formed in an outer peripheral surface of the third pulley 4605. The plurality of gear teeth extends in the rightward/leftward direction and is arrayed at regular intervals in the circumferential direction. The third pulley 4605 has an inner peripheral surface, and this inner peripheral surface fits an outer peripheral surface of the countershaft 4602. As the third pulley 4605 fits the countershaft 4602, the third pulley 4605 can corotate with the countershaft 4602. The third pulley 4605 is an example of a driving pulley.

The fourth pulley 4607 is disposed frontward of the third pulley 4605 with a space provided therebetween. The fourth pulley 4607 is so disposed as to be flush with the third pulley 4605 in the rightward/leftward direction. The fourth pulley 4607 is a substantially cylindrical member having an axis extending in the rightward/leftward direction. The fourth pulley 4607 is a timing pulley. A plurality of gear teeth is formed in an outer peripheral surface of the fourth pulley 4607. The plurality of gear teeth extends in the rightward/leftward direction and is arrayed at regular intervals in a circumferential direction. The fourth pulley 4607 has an inner peripheral surface, and this inner peripheral surface fits the spindle 4606. A plurality of engaging holes 4042k is disposed in a left side surface of the fourth pulley 4607. The plurality of engaging holes 4042k is disposed at regular intervals in the circumferential direction. The engaging holes 4042k are each formed to have a substantially circular shape as viewed in a left side view. The engaging holes 4042k are so formed as to be recessed in the rightward direction from the left side surface of the fourth pulley 4607. The fourth pulley 4607 is an example of a driven pulley.

The spindle 4606 is a substantially columnar member having an axis extending in the rightward/leftward direction. A left end portion of the spindle 4606 is rotatably supported by the bearing 4071a. A right end portion of the spindle 4606 fits the shaft washer of the bearing 4071b and is rotatably supported by the bearing 4071b. The fourth pulley 4607 is coaxially mounted to the left end portion of the spindle 4606. A mounting portion 4606A is provided at the right end portion of the spindle 4606. The mounting portion 4606A is provided with a washer and a bolt that penetrates a base portion of the cutting blade 4061 in the rightward/leftward direction. As this bolt is tightened, the mounting portion 4606A pinches the cutting blade 4061 via the washer. The cutting blade 4061 can be attached to or removed from the mounting portion 4606A by tightening or removing the bolt. The spindle 4606 is configured to transmit, via the mounting portion 4606A, a driving force to the cutting blade 4061 connected to the right end portion of the spindle 4606 and can thus rotate the cutting blade 4061. Incidentally, the spindle 4606 and the mounting portion 4606A are an example of an output shaft.

The second belt 4608 is looped under tension over the third pulley 4605 and the fourth pulley 4607. A width of the second belt 4608 in the rightward/leftward direction is substantially equal to a width of the third pulley 4605 and a width of the fourth pulley 4607. The second belt 4608 is an endless belt. A plurality of teeth is formed in an inner peripheral surface of the second belt 4608. The plurality of teeth extends in the rightward/leftward direction and is parallel to each other. The plurality of teeth is arrayed in a circumferential direction and engages with the plurality of gear teeth formed in an outer peripheral surface of each of the third pulley 4605 and the fourth pulley 4607. As the second belt 4608 engages with and is looped under tension over the third pulley 4605 and the fourth pulley 4607, the second belt 4608 can transmit rotation of the third pulley 4605 to the fourth pulley 4607.

As illustrated in Fig. 23A and 23B, a lock mechanism 8 includes an engaging member 8A and a coil spring 8B. The engaging member 8A is a substantially columnar member extending in the rightward/leftward direction. The engaging member 8A is so disposed as to penetrate the gear housing 4650 and the gear case 4065 in the rightward/leftward direction. The engaging member 8A is disposed between the countershaft 4602 and the spindle 4606 in the frontward/rearward direction. Specifically, the engaging member 8A penetrates through the through-hole 4041k and the through-hole 4041j. A right end portion of the lock mechanism 8 has a diameter smaller than that of the engaging hole 4042k and is engageable with the engaging hole 4042k. The coil spring 8B is disposed between a left side surface of the gear housing 4650 and the gear case 4065. Specifically, a right end portion of the coil spring 8B abuts the gear case 4065, and a left end portion of the coil spring 8B engages with the engaging member 8A. Thus, the coil spring 8B is configured to urge the engaging member 8A in the leftward direction. The engaging member 8A is an example of an engagement portion. The coil spring 8B is an example of an urging member.

When the motor body 4068A is in operation, the fan 4068C rotates to produce a cooling air. The cooling air that has cooled the motor body 4068A moves within the first housing 41 as indicated by an arrow A in Fig. 22 and is discharged to the outside.

An operation performed when a user attaches or removes the cutting blade 4061 before starting or after finishing work will be described. An operator brings the engaging member 8A into engagement with the fourth pulley 4607. Specifically, in a state illustrated in Fig. 23A, the operator presses the left end portion of the engaging member 8A rightward. Upon the engaging member 8A being pressed, the engaging member 8A moves rightward against an urging force of the coil spring 8B. The right end portion of the engaging member 8A that has moved rightward engages with the engaging hole 4042k (Fig. 23B). In this manner, the engaging member 8A engages with the fourth pulley 4607.

The fourth pulley 4607 that has engaged with the engaging member 8A becomes nonrotatable so that the mounting portion 4606A becomes nonrotatable. Retaining a state where the engaging member 8A is being pressed and the mounting portion 4606A is nonrotatable, the operator tightens or removes a bolt into or from the mounting portion 4606A to attach or remove the cutting blade 4061. Thereafter, upon the operator who has finished work releasing his/her hand from the engaging member 8A, the engaging member 8A moves leftward and away from the fourth pulley 4607 due to the urging force of the coil spring 8B, and the state illustrated in Fig. 23A is restored.

According to the sixth embodiment described above, as the engaging member 8A engages with the fourth pulley 4607, rotation of the spindle 4606 can be stopped at an engaging location away from the spindle 4606, unlike a known configuration of locking a spindle. Engagement at a location away from the spindle 4606 makes it possible to counter torque exerted on the spindle 4606 with a small force. Accordingly, the engaging member 8A or the lock mechanism 8 can be constituted by a component with a small load capacity, and the engaging member 8A or the lock mechanism 8 of a simple and small configuration can be achieved.

The engaging location can be provided between the countershaft 4602 and the spindle 4606. The engaging member 8A can be disposed between an axis of rotation of the fourth pulley 4607 and an axis of rotation of the third pulley 4605 in the frontward/rearward direction, and an efficient arrangement utilizing spacing of the components can be achieved.

The use of the second belt 4608 enables reliable transmission of a rotary force and a driving force.

As a side surface of the fourth pulley 4607 and the engaging member 8A engage with each other, a configuration in which the side surface of the fourth pulley 4607 is efficiently utilized can be achieved. Accordingly, the size of a configuration in the vicinity of the fourth pulley 4607 can be reduced.

With the use of the urging force of the coil spring 8B, the engagement of the fourth pulley 4607 and the engaging member 8A is released automatically after the user stops pressing the engaging member 8A. Accordingly, an operation of replacing the cutting blade 4061 can be facilitated efficiently.

Thus far, the sixth embodiment has been described. The sixth embodiment is merely illustrative, and it should be appreciated by a person skilled in the art that various modifications can be made to the combinations of the constituent elements of the sixth embodiment and that such modifications also fall within the scope of the present invention.

In the sixth embodiment, a plurality of engaging holes 4042k is provided. Alternatively, a single engaging hole 4042k may be provided.

In the sixth embodiment, the engaging member 8A engages with the engaging hole 4042k formed in the side surface portion of the fourth pulley 4607. The present invention, however, is not limited to this configuration. As illustrated in the following embodiments, a configuration in which an engaging member engages with an outer peripheral surface of a fourth pulley can also be employed.

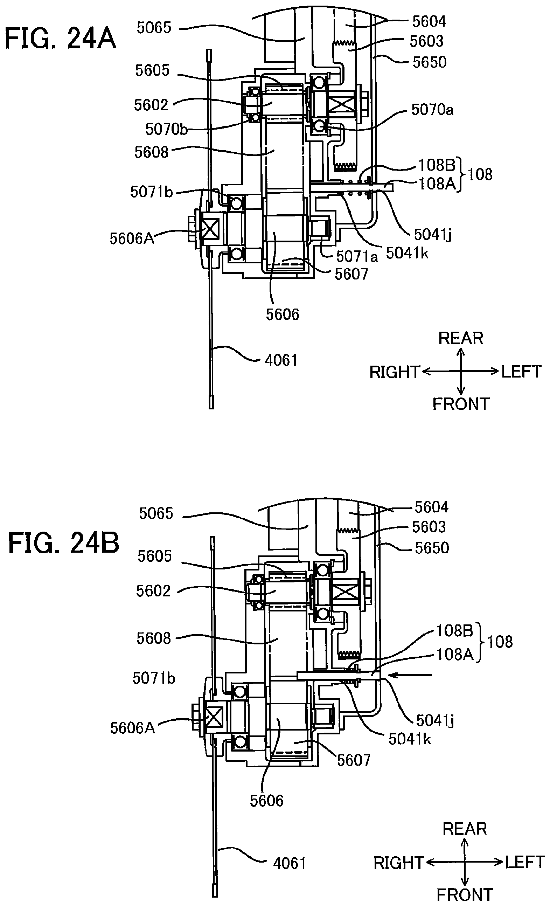

Next, a seventh embodiment will be described with reference to Figs. 24A and 24B. Seventh to tenth embodiments described hereinafter are all modifications of the sixth embodiment. In the description of the seventh embodiment, components and members that correspond to the components and the members constituting the sixth embodiment are given reference characters obtained by adding 1000 to the reference characters used in the sixth embodiment, and descriptions thereof will be omitted.

A fourth pulley 5607 according to the seventh embodiment is a substantially cylindrical member having an axis extending in the rightward/leftward direction. A plurality of gear teeth is formed in an outer peripheral surface of the fourth pulley 5607. The plurality of gear teeth extends in the rightward/leftward direction and is arrayed at regular intervals in a circumferential direction. A third pulley 5605 has an inner peripheral surface, and this inner peripheral surface fits an outer peripheral surface of a spindle 5606. No hole is formed in a left side surface portion of the fourth pulley 5607. The third pulley 5605 is an example of a drive pulley, and the fourth pulley 5607 is an example of a driven pulley. The spindle 5606 and the mounting portion 5606A are an example of the output shaft.

A lock mechanism 108 includes an engaging member 108A and a coil spring 108B. The engaging member 108A is a substantially columnar member extending in the rightward/leftward direction. The engaging member 108A is so disposed as to penetrate a gear housing 5650 and a gear case 5065 in the rightward/leftward direction. The coil spring 108B is disposed between a left side surface portion of the gear housing 5650 and the gear case 5065. Specifically, a right end portion of the coil spring 108B abuts the gear case 5065, and a left end portion of the coil spring 108B engages with the engaging member 108A. Thus, the coil spring 108B is configured to urge the engaging member 108A in the leftward direction. The engaging member 108A is an example of the engagement portion. The coil spring 108B is an example of the urging member.

The engaging member 108A according to the seventh embodiment is disposed between a countershaft 5602 and the spindle 5606 in the frontward/rearward direction. The engaging member 108A is disposed so that the engaging member 108A can abut the outer peripheral surface of the fourth pulley 5607. Upon an operator pressing a left end portion of the engaging member 108A rightward, the engaging member 108A moves rightward against an urging force of the coil spring 108B. A right end portion of the engaging member 108A that has moved rightward abuts the outer peripheral surface of the fourth pulley 5607 and engages with the gear teeth formed in the outer peripheral surface of the fourth pulley 5607. The fourth pulley 5607 that has engaged with the engaging member 108A becomes nonrotatable so that the mounting portion 5606A becomes nonrotatable.

Retaining a state where the engaging member 108A is being pressed and the mounting portion 5606A is nonrotatable, the operator tightens or removes a bolt into or from the mounting portion 4606A to attach or remove a cutting blade 4061. Thereafter, upon the operator who has finished work releasing his/her hand from the engaging member 108A, the engaging member 108A moves leftward and away from the fourth pulley 5607 due to the urging force of the coil spring 108B, and the state illustrated in Fig. 24A is restored.

In a modification, teeth engageable with the gear teeth in the fourth pulley 5607 may be provided on an outer peripheral surface of the engaging member 108A. In this case, the engaging member 108A and the fourth pulley 5607 engage with each other more reliably. Thus, the fourth pulley 5607, the spindle 5606, and the mounting portion 5606A are fixed more firmly.

According to the seventh embodiment described above, as the engaging member 108A engages with the fourth pulley 5607, rotation of the spindle 5606 can be stopped at an engaging location away from the spindle 5606, unlike a known configuration of locking a spindle. Engagement at a location away from the spindle 5606 makes it possible to counter torque exerted on the spindle 5606 with a small force. Particularly, of the components that corotate with the spindle 5606, the engaging member 108A engages with the outer peripheral surface (gear teeth) of the fourth pulley 5607 that is farthest from a center axis of rotation of the spindle 5606, and thus the spindle can be locked with a small force. Accordingly, the engaging member 108A can be constituted by a component with a small load capacity, and the engaging member 108A or the lock mechanism 108 of a simple and small configuration can be achieved.

The engaging location can be provided between the countershaft 5602 and the spindle 5606. The engaging member108A can be disposed between an axis of rotation of the fourth pulley 5607 and an axis of rotation of the third pulley 5605 in the frontward/rearward direction, and an efficient arrangement utilizing spacing of the components can be achieved. In other words, at least a portion of the lock mechanism 108 is located in a space enclosed by the fourth pulley 5607, the third pulley 5605, and a second belt 5608, and thus space-saving can be achieved.

The use of the second belt 5608 enables reliable transmission of a rotary force and a driving force.

As the gear teeth in the fourth pulley 5607 engage with the engaging member 108A, the engaging member 108A can be disposed efficiently by utilizing the space between the fourth pulley 5607 and the third pulley 5605. Accordingly, the size of a configuration in the vicinity of the fourth pulley 5607 or the third pulley 5605 can be reduced.

With the use of the urging force of the coil spring 108B, the engagement of the fourth pulley 5607 and the engaging member 108A is released automatically after the user stops pressing the engaging member 108A. Accordingly, an operation of replacing the cutting blade 4061 can be facilitated efficiently.

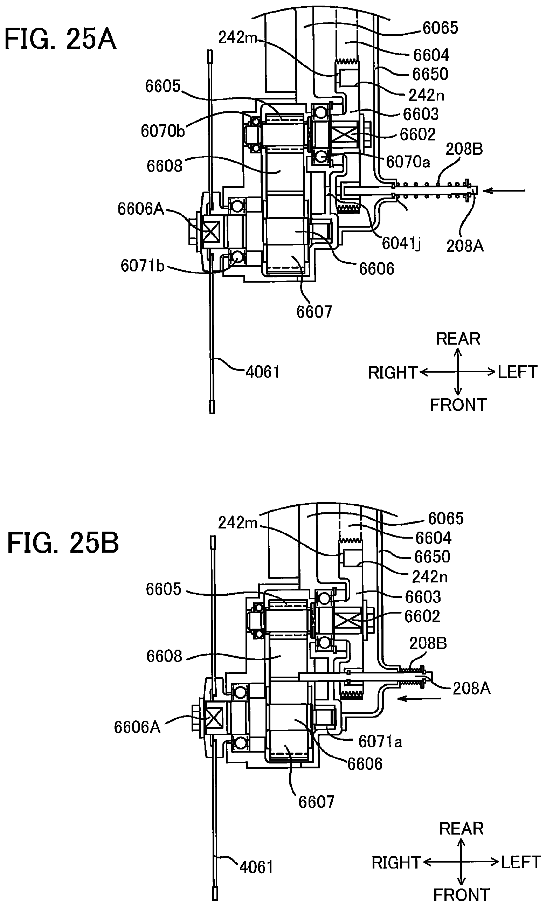

Next, an eighth embodiment will be described with reference to Figs. 25A and 25B wherein like parts and components are designated by the same reference numerals plus 2000 as those shown in the sixth embodiments to avoid duplicating description.

A fourth pulley 6607 according to the seventh embodiment is a substantially cylindrical member having an axis extending in the rightward/leftward direction. A plurality of gear teeth is formed in an outer peripheral surface of the fourth pulley 6607. The plurality of gear teeth extends in the rightward/leftward direction and is arrayed at regular intervals in a circumferential direction. The fourth pulley 6607 has an inner peripheral surface, and this inner peripheral surface fits an outer peripheral surface of a spindle 6606. The fourth pulley 6607 is an example of the drive pulley. The spindle 6606 and the mounting portion 6606A are an example of the output shaft.

A lock mechanism 208 includes an engaging member 208A and a coil spring 208B. The engaging member 208A is a substantially columnar member extending in the rightward/leftward direction. The engaging member 208A is so disposed as to penetrate a gear housing 6650 and a gear case 6065 in the rightward/leftward direction. The engaging member 208A according to the eighth embodiment is disposed between a countershaft 6602 and the spindle 6606 in the frontward/rearward direction. The engaging member 208A is disposed so that the engaging member 208A can abut the outer peripheral surface of the fourth pulley 6607. A right end portion of the coil spring 208B abuts a left side surface of the gear housing 6650. A left end portion of the coil spring 208B engages with the engaging member 208A to urge the engaging member 208A leftward. The engaging member 208A is an example of an engagement portion. The coil spring 208B is an example of an urging member.

A second pulley 6603 is substantially circular as viewed in a side view in the rightward/leftward direction and has a substantially cylindrical shape with an axis extending in the rightward/leftward direction. A plurality of grooves is formed in an outer peripheral surface of the second pulley 6603, and the plurality of grooves extends in a circumferential direction. The plurality of grooves in the second pulley 6603 is disposed parallel to each other and arrayed in the rightward/leftward direction in the outer peripheral surface of the second pulley 6603. The second pulley 6603 is mounted coaxially with the countershaft 6602.

A plurality of through-holes 242m is provided in the second pulley 6603. The plurality of through-holes 242m penetrates the second pulley 6603 in the rightward/leftward direction. The plurality of through-holes 242m is provided at regular intervals in a circumferential direction. The through-holes 242m each have a diameter greater than that of the engaging member 208A. Therefore, the engaging member 208A can penetrate through the through-hole 242m in the rightward/leftward direction. A groove 242n is provided on the left side of the through-hole 242m. The groove 242n is recessed rightward from a left side surface of the second pulley 6603. The groove 242n is annular in shape whose center is coincident with an axis of the second pulley 6603 as viewed in a left side view. The groove 242n has a width greater than that of a front end of the engaging member 208A. A right end portion of the engaging member 208A is disposed inside the groove 242n.

Upon an operator pressing a left end portion of the engaging member 208A rightward, the engaging member 208A moves rightward against an urging force of the coil spring 208B. The right end portion of the engaging member 208A that has moved rightward passes through the groove 242n and the through-hole 242m, approaches the outer peripheral surface of the fourth pulley 6607, and engages with the gear teeth formed in the outer peripheral surface of the fourth pulley 6607 (Fig. 25B).

The fourth pulley 6607 that has engaged with the engaging member 208A becomes nonrotatable so that the mounting portion 6606A becomes nonrotatable. Retaining a state where the engaging member 208A is being pressed and the mounting portion 6606A is nonrotatable, the operator tightens or removes a bolt into or from the mounting portion 6606A to attach or remove a cutting blade 4061. Thereafter, upon the operator who has finished work releasing his/her hand from the engaging member 208A, the engaging member 208A moves leftward and away from the fourth pulley 6607 due to the urging force of the coil spring 208B, and the state illustrated in Fig. 25A is restored.

Teeth engageable with the gear teeth in the fourth pulley 6607 may be formed on an outer peripheral surface of the engaging member 208A. In this case, the engaging member 208A and the fourth pulley 6607 engage with each other more reliably. Thus, the fourth pulley 6607, the spindle 6606, and the mounting portion 6606A are fixed more firmly.

In the eighth embodiment described above, the second pulley 6603 and the fourth pulley 6607 can be so disposed as to overlap each other as viewed in a left side view or a right side view. Accordingly, an arrangement of a transmission mechanism 242 can be made compact. In addition, an outer diameter of the second pulley 6603 can be increased without being constrained by a position where the engaging member 208A is disposed. Thus, a reduction ratio of a first pulley 242A and the second pulley 6603 can be increased. Such a configuration allows for a flexible design of components constituting the transmission mechanism 242. For example, the fourth pulley can have a smaller diameter.

According to the eighth embodiment described above, as the engaging member 208A engages with the fourth pulley 6607, rotation of the spindle 6606 can be stopped at an engaging location away from the rotation shaft, unlike a known configuration of locking a spindle. Engagement at a location away from the spindle 6606 makes it possible to counter torque exerted on the spindle 6606 with a small force. Accordingly, the engaging member 208A can be constituted by a component with a small load capacity, and the engaging member 208A or the lock mechanism 208 of a simple and small configuration can be achieved.

The engaging location can be provided between the countershaft 6602 and the spindle 6606. The engaging member 208A can be disposed between an axis of rotation of the fourth pulley 6607 and an axis of rotation of the third pulley 6605 in the frontward/rearward direction, and an efficient arrangement utilizing spacing of the components can be achieved.

The use of the second belt 6608 enables reliable transmission of a rotary force and a driving force.

As the gear teeth in the fourth pulley 6607 engage with the engaging member 208A, the engaging member 208A can be disposed efficiently by utilizing the space between the fourth pulley 6607 and the third pulley 6605. Accordingly, the size of a configuration in the vicinity of the fourth pulley 6607 or the third pulley 6605 can be reduced.

With the use of the urging force of the coil spring 208B, the engagement of the fourth pulley 6607 and the engaging member 208A is released automatically after the user stops pressing the engaging member 208A. Accordingly, an operation of replacing the cutting blade 4061 can be facilitated efficiently.

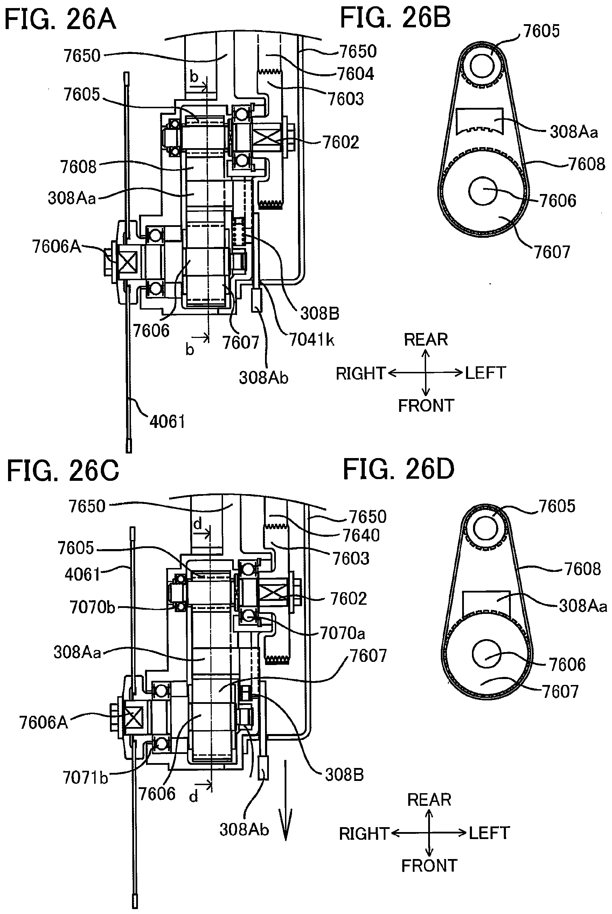

A ninth embodiment will next be described with reference to Figs. 26A to 26D, wherein like parts and components are designated by the same reference numerals plus 3000 as those shown in the sixth embodiment for avoiding duplicating description.

A lock mechanism 308 according to the ninth embodiment includes an engaging member 308A and a coil spring 308B. The engaging member 308A includes a main body 308Aa and a holding portion 308Ab. The engaging member 308A is an example of the engagement portion. The coil spring 308B is an example of the urging member.

The main body 308Aa is formed into a rectangular shape as viewed in a front view. The main body 308Aa is disposed between a third pulley 7605 and a fourth pulley 7607 in the frontward/rearward direction. As illustrated in Figs. 26A and 26B, the main body 308Aa has a front surface that is recessed rearward. This front surface is formed into a substantially circular arc shape that substantially coincides with a shape of an outer periphery of the fourth pulley 7607 as viewed in a side view. The front surface of the main body 308Aa is further provided with protrusions engageable with gear teeth in the fourth pulley 7607. The third pulley 7605 is an example of the drive pulley. The fourth pulley 7607 is an example of the driven pulley.

The holding portion 308Ab is fixed to a left side surface of the main body 308Aa. The holding portion 308Ab is a rod-shaped member extending in the frontward/rearward direction. The holding portion 308Ab has a portion extending through a gear housing 7650 in the frontward/rearward direction. A front end of the holding portion 308Ab is exposed to the outside of the gear housing 7650 and can be held by an operator.

The coil spring 308B is so disposed as to extend in the frontward/rearward direction. A front end of the coil spring 308B is fixed by a gear case 7065. A rear end of the coil spring 308B abuts the main body 308Aa to urge the main body 308Aa rearward.

In a miter saw 300 according to the ninth embodiment, when attaching or removing a cutting blade 4061, an operator may pull the holding portion 308Ab frontward. At this point, the main body 308Aa bonded to the holding portion 308Ab moves frontward against an urging force of the coil spring 308B and engages with the gear teeth formed in the outer peripheral surface of the fourth pulley 7607 (Figs. 26C and 26D). As the engaging member 308A engages with the fourth pulley 7607, a spindle 7606 and a mounting portion 7606A are fixed nonrotatably. As the spindle 7606 and the mounting portion 7606A become nonrotatable, the cutting blade 4061 can be attached or removed. Thereafter, upon the operator who has finished work releasing his/her hand from the holding portion 308Ab, the engaging member 308A moves rearward and away from the fourth pulley 7607 due to the urging force of the coil spring 308B, and the state illustrated in Figs. 26A and 26B is restored. Incidentally, the spindle 7606 and the mounting portion 7606A are an example of the output shaft.

According to the ninth embodiment described above, as the engaging member 308A engages with the fourth pulley 7607, rotation of the spindle 7606 can be stopped at an engaging location away from the spindle 7606, unlike a known configuration of locking a spindle. Engagement at a location away from the spindle 7606 makes it possible to counter torque exerted on the spindle 7606 with a small force. Particularly, of the components that corotate with the spindle 7606, the engaging member 308A engages with the outer peripheral surface (gear teeth) of the fourth pulley 7607 that is farthest from a center axis of rotation of the spindle 7606, and thus the spindle can be locked with a small force. Accordingly, the engaging member 308A can be constituted by a component with a small load capacity, and the engaging member 308A or the lock mechanism 308 of a simple and small configuration can be achieved.

The engaging location can be provided between the countershaft 7602 and the spindle 7606. The engaging member 308A can be disposed between an axis of rotation of the fourth pulley 7607 and an axis of rotation of the third pulley 7605 in the frontward/rearward direction, and an efficient arrangement utilizing spacing of the components can be achieved.

The use of the second belt 7608 enables reliable transmission of a rotary force and a driving force.

As the gear teeth in the fourth pulley 7607 engage with the engaging member 308A, the engaging member 308A can be disposed efficiently by utilizing the space between the fourth pulley 7607 and the third pulley 7605. Accordingly, the size of a configuration in the vicinity of the fourth pulley 7607 or the third pulley 7605 can be reduced.

With the use of the urging force of the coil spring 308B, the engagement of the fourth pulley 7607 and the engaging member 308A is released automatically after the user stops pressing the engaging member 308A. Accordingly, an operation of replacing the cutting blade 4061 can be facilitated efficiently.

A tenth embodiment will next be described with reference to Figs. 27A to 27C, wherein like parts and components are designated by the same reference numerals plus 4000 as those shown in the sixth embodiment for avoiding duplicating description.

Fig. 27A is a sectional view illustrating a state where an engaging member 408A engages with a fourth pulley 8607 in a miter saw according to the tenth embodiment of the present invention. Fig. 27B is a right side view illustrating a third pulley 8605, a second belt 8608, and the engaging member 408A in a state where the engaging member 408A engages with the fourth pulley 8607. Fig. 27C is a right side view of the third pulley 8605, the second belt 8608, and the engaging member 408A in a state where the engaging member 408A is spaced apart from the fourth pulley 8607. In Figs. 27B and 27C, a portion of the members is illustrated in a perspective view to facilitate understanding of the structure among the members.

As illustrated in Figs. 27A to 27C, a lock mechanism 408 according to the ninth embodiment includes the engaging member 408A and a coil spring 408B. The engaging member 408A includes a main body 408Aa, a holding portion 408Ab, a rotating shaft 408Ac, and a protrusion 408Ad.

A gear housing 8650 has an elongated hole 441Aa formed therein. The elongated hole 441Aa is positioned in a front end portion of the gear housing 8650, and extends toward an upper portion of the gear housing 8650 and provides communication between an inside and an outside of the gear housing 8650.

As illustrated in Figs. 27A to 27C, the main body 408Aa is a substantially cylindrical member with its axis extending in the rightward/leftward direction. The protrusion 408Ad projecting outward in a radial direction of the main body 408Aa is provided on an outer peripheral surface of the main body 408Aa. The main body 408Aa and the protrusion 408Ad are disposed between the third pulley 8605 and the fourth pulley 8607. The main body 408Aa is coaxially bonded to the rotating shaft 408Ac. The rotating shaft 408Ac has a cylindrical shape extending in the rightward/leftward direction. A right end portion of the rotating shaft 408Ac is rotatably supported by a second housing 445 via a bearing. A left end portion of the rotating shaft 408Ac is rotatably supported by a gear case 8065 via a bearing. The rotating shaft 408Ac is bonded to the holding portion 408Ab at the left end portion of the rotating shaft 408Ac.

The holding portion 408Ab is a rod-shaped member. The holding portion 408Ab is so disposed as to penetrate through the elongated hole 441Aa. One end of the holding portion 408Ab is fixed to the left end portion of the rotating shaft 408Ac. Another end of the holding portion 408Ab is so disposed as to project to the outside and can be held by an operator.

A rear end of the coil spring 408B is fixed to the upper portion of the gear housing 8650. A front end of the coil spring 408B is fixed to the holding portion 408Ab. The coil spring 408B is configured to urge the engaging member 408A in a counterclockwise direction, as viewed in a right side view, via the holding portion 408Ab (Figs. 27B and 27C). In a state where the holding portion 408Ab is not held, the holding portion 408Ab which is urged in the counterclockwise direction, as viewed in a right side view, by an urging force of the coil spring 408B is located rearward (Fig. 27C). In this state, the protrusion 408Ad is spaced apart from the fourth pulley 8607.

In a miter saw 400 according to the tenth embodiment, when attaching or removing a cutting blade 4061, an operator pivots the holding portion 408Ab frontward against the urging force of the coil spring 408B. At this point, the holding portion 408Ab pivots clockwise, as viewed in a right side view. As a result, the holding portion 408Ab pivots frontward, as illustrated in Fig. 27A. As the holding portion 408Ab pivots, the main body 408Aa also pivots clockwise, as viewed in a right side view. As a result, the protrusion 408Ad approaches the fourth pulley 8607 and engages with the gear teeth in the fourth pulley 8607 (Fig. 27B). Thereafter, upon the operator who has finished work releasing his/her hand from the holding portion 408Ab, the engaging member 408A pivots counterclockwise, as viewed in a right side view, and away from the fourth pulley 8607 due to the urging force of the coil spring 408B, and the state illustrated in Fig. 27C is restored.

As the engaging member 408A engages with the fourth pulley 8607, a spindle 8606 and a mounting portion 8606A are fixed nonrotatably. As the spindle 8606 and the mounting portion 8606A become nonrotatable, the cutting blade 4061 can be attached or removed.

The engaging member 408A is an example of the engagement portion. The coil spring 408B is an example of the urging member. The third pulley 8605 is an example of the drive pulley. The fourth pulley is an example of the driven pulley. The spindle 8606 and the mounting portion 8606A are an example of the output shaft.

According to the tenth embodiment described above, as the engaging member 408A engages with the fourth pulley 8607, rotation of the spindle 8606 can be stopped at an engaging location away from the spindle 8606, unlike a known configuration of locking a spindle. Engagement at a location away from the spindle 8606 makes it possible to counter torque exerted on the spindle 8606 with a small force. Accordingly, the engaging member 408A or the lock mechanism 408 can be constituted by a component with a small load capacity, and the engaging member 408A or the lock mechanism 408 of a simple and small configuration can be achieved.

The engaging location can be provided between the countershaft 8602 and the spindle 8606. The engaging member 408A can be disposed between an axis of rotation of the countershaft 8602 and an axis of rotation of the spindle 8606 in the frontward/rearward direction, and an efficient arrangement utilizing spacing of the components can be achieved.

The use of the second belt 8608 enables reliable transmission of a rotary force and a driving force.

As the gear teeth in the fourth pulley 8607 engage with the engaging member 408A, the engaging member 408A can be disposed efficiently by utilizing the space between the fourth pulley 8607 and the third pulley 8605. Accordingly, the size of a configuration in the vicinity of the fourth pulley 8607 or the third pulley 8605 can be reduced.

With the use of the urging force of the coil spring 408B, the engagement of the fourth pulley 8607 and the engaging member 408A is released automatically after the user stops pressing the engaging member 408A. Accordingly, an operation of replacing the cutting blade 4061 can be facilitated efficiently.

An urging member of the present invention is not limited to a coil spring. As an alternative to the coil spring used in each embodiment, an urging force can be generated by using various springs, such as a leaf spring or a disc spring, or elastic materials, such as elastomer. The motor body 4068A is not limited to a commutator motor. For example, it is obvious to a person skilled in the art that the motor body 4068A can be applied to a power tool having a driving unit, such as a brushless-type motor. It is also apparent to a person skilled in the art that the motor body 4068A is not limited to a power tool in which a motor is used as a driving source.

The engaging members are configured to engage with the fourth pulleys. Alternatively, the engaging members may be configured to engage with the third pulleys. In this case, in order to fix a spindle reliably, it is preferable that a timing belt be looped under tension over a third pulley and a fourth pulley. The fourth pulley can be fixed at a position by the fixing of the third pulley through the employment of the timing belt.

Thus far, the present invention has been described on the basis of embodiments. The present invention, however, is not limited to the embodiments described above, and various changes can be made within the scope that does not depart from the spirit of the present invention.

### [Reference Signs List]

1, 101, 102, 201, 301: miter saw, 6, 106, 107, 206, 306: cutting unit, 60, 260: transmission mechanism, 61: cutting blade, 64: motor housing, 65, 165, 265: gear case, 66, 166, 266, 366: gear cover, 68: motor, 68B: motor shaft, 69a, 69b, 70a, 70b, 71a, 71b: bearing, 601: first pulley, 602: countershaft, 603, 2603: second pulley, 604: first belt, 605: third pulley, 606: spindle, 606A : mounting portion, 607: fourth pulley, 608: second belt, 652A, 1652A: support part, 653A, 1653A: support , 655, 656: protrusion, 661B, 2665A: support part, 661C : guide, 662A: support part, 662B: guide, 1652B: guide, 1653B: guide, 2661, 3661: bearing holder, 2661a, 2661b: stepped portion, 2661c: stepped portion, 2661d, 3661d: through-hole, 2663, 3663: bearing holder, 2665: protrusion, 3661e: notch, 3663D: projection

## Claims

1. A cutting tool comprising:
a motor having a motor shaft configured to be drivingly rotated;
a first pulley provided at the motor shaft and rotatable integrally with the motor shaft;
a countershaft rotatably driven in accordance with the rotation of the motor shaft;
a second pulley and a third pulley those provided at the countershaft;
a first belt looped under tension over the first pulley and the second pulley to transmit the rotation of the motor shaft to the countershaft;
an output shaft having a mount portion to which a cutter blade is attachable;
a fourth pulley provided at the output shaft;
a second belt looped under tension over the third pulley and the fourth pulley to transmit the rotation of the countershaft to the output shaft;
a first bearing member rotatably supporting the countershaft and positioned between the second pulley and the third pulley;
a second bearing member rotatably supporting the countershaft and positioned opposite to the second pulley relative to the third pulley; and
a support base supporting the first bearing member and the second bearing member, the support base having a portion positioned between the second pulley and the third pulley.

2. The cutting tool according to claim 1, wherein the support base comprises:
a first support member supporting the first bearing member and the second pulley; and
a second support member supporting the second bearing member.

3. The cutting tool according to claim 2, further comprising:
a third bearing member supported to the first support member and rotatably supporting the output shaft; and
a fourth bearing member supported to the second support member and rotatably supporting the output shaft.

4. The cutting tool according to claim 3, wherein the first pulley has a diameter smaller than that of the second pulley, and
wherein the third pulley has a diameter smaller than that of the fourth pulley; the first pulley and the second pulley providing a reduction ratio higher than that provided by the third pulley and the fourth pulley.

5. The cutting tool according to claim 3 or 4, wherein the second belt is a timing belt, and
wherein the third pulley and the fourth pulley are timing pulleys.

6. The cutting tool according to any one of claims 3 to 5, wherein the first belt is a V belt, and
wherein the first pulley and the second pulley are V pulleys.

7. The cutting tool according to any one of claims 3 to 6, further comprising:
a motor housing accommodating therein the motor;
a fifth bearing member supported to the motor housing and rotatably supporting the motor shaft; and
a sixth bearing member supported to the first support member and rotatably supporting the motor shaft.

8. The cutting tool according to any one of claims 3 to 7, wherein the second support member comprises:
a first support part supporting the second bearing member;
a first guide part positioned adjacent to the first support part and sloped inward in a radial direction of the countershaft in a direction from an axially inner portion of the countershaft toward the first support part; and
a second support part supporting the fourth bearing member.

9. The cutting tool according to claim 8, wherein the second support member further comprises a second guide part positioned adjacent to the second support part and sloped inward in a radial direction of the output shaft in a direction from an axially inner portion of the output shaft toward the second support part.

10. The cutting tool according to claim 9, wherein the second bearing member rotatably supports an end portion of the countershaft, the end portion being opposite to another end portion at which the second pulley is provided,
wherein the first guide part is positioned adjacent to an end of the first support part, the end being closer to the second pulley than another end of the first support part is to the second pulley, and
wherein the second guide part is positioned adjacent to an end of the second support part, the end being farther from the mount portion than another end of the second support part is from the mount portion.

11. The cutting tool according to claim 9, wherein the third bearing member rotatably supports an end portion of the output shaft, the end portion being opposite to another end portion at which the mount portion is provided,
wherein the first guide part is positioned adjacent to an end of the first support part, the end being farther from the second pulley than another end of the first support part is from the second pulley, and
wherein the second guide part is positioned adjacent to an end of the second support part, the end being closer to the mount portion than another end of the second support part is to the mount portion.

12. The cutting tool according to claim 3, wherein the second support member comprises a first support portion supporting the fourth bearing member, and a second support portion supporting the second bearing member, the first support portion and the second support portion being differently constructed from each other.

13. The cutting tool according to claim 12, wherein the first support member comprises a first positioning portion to fix a position of the first support portion in a radial direction of the output shaft.

14. The cutting tool according to claim 13, wherein the first support portion comprises a first engagement portion engaging the first positioning portion.

15. The cutting tool according to any one of claims 12 to 14, wherein the first support portion comprises a second positioning portion to fix a position of the second support portion in a radial direction of the countershaft.

16. The cutting tool according to claim 15, wherein the second support portion comprises a second engagement portion engaging the second positioning portion.

17. The cutting tool according to any one of claims 12 to 16, wherein the first support portion extends to cover the countershaft, and is formed with a through-hole facing an outer end portion in an axial direction of the countershaft,
wherein the second bearing member is inserted in the through-hole, and
wherein the second support portion supports the second bearing member inserted in the through-hole.

18. The cutting tool according to claim 17, wherein the first support portion is formed with a notch extending axially inward of the countershaft from an open end of the through-hole, the open end being open to the second support portion, and
wherein the second support part includes a closure portion closing an open end of the notch which is a part of the open end of the through-hole.

19. The cutting tool according to claim 18, wherein the closure portion protrudes outward in a radial direction of the countershaft.

20. The cutting tool according to claim 18 or 19, further comprising a fan provided at the motor shaft and rotatable integrally with the motor shaft to generate a cooling air stream, wherein the notch and the closure portion define in combination a port for discharging the cooling air stream therethrough out of the second support member.

21. A cutting device comprising:
a motor;
a drive pulley rotatable upon receiving driving force from the motor;
an output shaft to which a cutting blade for cutting a workpiece is detachably attachable;
a driven pulley connected to the output shaft to rotate integrally with the output shaft;
an endless belt looped under tension over the drive pulley and the driven pulley to transmit rotation of the drive pulley to the driven pulley; and
an engagement portion engageable with the driven pulley to prevent the driven pulley from rotating upon engagement with the driven pulley.

22. The cutting device according to claim 21, wherein the engagement portion is engageable with the driven pulley at a position between a rotation shaft of the drive pulley and a rotation shaft of the driven pulley.

23. The cutting device according to claim 21 or 22, wherein the driven pulley is a toothed pulley in which gear teeth are provided at an outer peripheral surface of the driven pulley and are arrayed in a circumferential direction, and
wherein the endless belt has an inner surface provided with teeth meshingly engageable with the gear teeth.

24. The cutting device according to claim 3, wherein the engagement portion is engageable with at least one of the gear teeth.

25. The cutting device according to any one of claims 21 to 23, wherein the driven pulley has a side surface portion extending in a direction perpendicular to the output shaft, and
wherein the engagement portion is engageable with the side surface portion.

26. The cutting device according to claim 25, wherein the side surface portion is formed with an engagement hole engageable with the engagement portion.

27. The cutting device according to any one of claims 21 to 26, further comprising an urging member applying urging force to the engagement portion in a direction away from the driven pulley,
wherein the engagement portion is engaged with the driven pulley by moving the engagement portion toward the driven pulley against the urging force of the urging member.

28. The cutting device according to any one of claims 21 to 27, further comprising a housing accommodating therein the drive pulley, the driven pulley, the engagement portion, and the endless belt,
wherein the engagement portion has one end portion exposed to an outside of the housing to allow an operator to hold or push the end portion.

29. The cutting device according to any one of claims 21 to 28, further comprising a rotary member rotatable integrally with the drive pulley upon receiving driving force from the motor,
wherein the rotary member is formed with a through-hole extending in parallel to a rotation axis of the rotary member, the engagement portion being insertable through the through-hole.
